Europäisches Patentamt

European Patent Office

Office européen des brevets

(19)

(11) **EP 1 324 252 A2**

(12) # EUROPEAN PATENT APPLICATION

(43) Date of publication:
**02.07.2003 Bulletin 2003/27**

(51) Int Cl.⁷: **G06F 17/60**

(21) Application number: **02258956.8**

(22) Date of filing: **24.12.2002**

(84) Designated Contracting States:
**AT BE BG CH CY CZ DE DK EE ES FI FR GB GR
IE IT LI LU MC NL PT SE SI SK TR**
Designated Extension States:
**AL LT LV MK RO**

(30) Priority: **28.12.2001 JP 2001399937**

(71) Applicant: **MATSUSHITA ELECTRIC INDUSTRIAL
CO., LTD.**
**Kadoma-shi, Osaka 571-8501 (JP)**

(72) Inventor: **Terada, Yoshihisa
Kadoma-shi, Osaka-fu 571-0064 (JP)**

(74) Representative: **Crawford, Andrew Birkby et al
A.A. Thornton & Co.
235 High Holborn
London WC1V 7LE (GB)**

(54) **Contents distribution system**

(57)     A service system for distributing a chargeable content. The contents distribution system is able to collect a contents use fee while enabling a contents user to use a content at a low cost, and enabling a company that sells the product by increasing the user's appetite for buying the product without running a commercial or the like in the content. The contents user buys a product of a certain company to reduce the use fee of a chargeable content. The contents distribution apparatus manages the purchase history of the user. The contents distribution apparatus discounts the contents use fee based pm the purchase history, and instead charges the company the discount of the contents use fee.

FIG.1

**Description**

This application is based on an application No. 2001-399937 filed in Japan, the content of which is hereby incorporated by reference.

BACKGROUND OF THE INVENTION

(1) Field of the Invention

The present invention relates to a technique of distributing chargeable contents, and specifically a technique of collecting payments for the chargeable contents

(2) Description of the Related Art

In recent years, music or broadcast program contents have been distributed to users through digital broadcasting or the Internet.

In general, an enormous cost is required for producing and distributing such contents. As a result, the producer or distributor of a content, for example, seeks a sponsor who would bear the cost but in return advertise a product (in case the sponsor is a maker of the product), taking the advantage of the distribution. In such a system, the producer/distributor produces a content by inserting a commercial of the sponsor therein, and distributes the content to users. When the users reproduce the content, the commercial is also reproduced. If the sales of the product increases due to the advertisement, the sponsor can cover the initial investment used in the production and distribution of the content.

On the other hand, the presence of the advertisement may hinder the users from enjoying viewing the reproduced contents. As a matter of fact, some users desire contents that do not contain advertisement of companies.

For the users to enjoy watching a content without advertisement, the users have to share the production cost of the content, and also pay as much as he/she uses to the content producer/distributor.

In a pay television or the like, sometimes free-of-charge programs are broadcast. However, such a service is provided for the purpose of obtaining new subscribers, and the broadcast station bears the cost of producing and broadcasting the content. In most cases, users cannot select programs as he/she likes, but can only watch a limited number of free-of-charge programs.

Some distributors give a discount on the contents use fee by issuing coupons to the users who have bought products of sponsor companies. However, since the expenses for the coupons are shared by a plurality of sponsor companies, a certain company cannot issue coupons only to the users who have bought the products of the certain company. Accordingly, the companies that issue coupons also have to advertise their products by running a commercial or the like. Refer to Japanese Laid-Open Patent Application No. 2001-216451.

As described above, according to the conventional systems, the users have to see advertisement of companies to use contents at no charge. Otherwise, the users have to pay the contents use fees.

SUMMARY OF THE INVENTION

The object of the present invention is therefore to provide a contents distribution system, a payment collection method, a program, and a recording medium that can provide users with contents at a low charge.

The above object can be fulfilled by a contents distribution system comprising: a contents distribution apparatus that distributes a chargeable content and product information concerning a product sold by a sponsor of the content; a reception apparatus that receives the chargeable content and the product information; and a sponsor apparatus owned by the sponsor, wherein a user buys the product related to the product information, the reception apparatus transmits purchase history information that indicates that the user bought the product, to the contents distribution apparatus, the contents distribution apparatus receives the purchase history information, calculates a discount of a viewing fee of the content using the received purchase history information, charges the user an amount that is obtained by subtracting the discount from the viewing fee, and charges the sponsor the discount, and the sponsor apparatus transmits information for compensating for the charged discount, to the contents distribution apparatus.

With the above-stated construction, the contents distribution system calculates a discount of a viewing fee of the chargeable content using the purchase history information, charges the user an amount that is obtained by subtracting the discount from the viewing fee, and charges the sponsor the discount, and the sponsor apparatus transmits information for compensating for the charged discount, to the contents distribution apparatus.

In this way, the sponsor bears part of the viewing fee that the viewer should pay for the viewing. Accordingly, the user benefits from the reduction of the viewing fee.

BRIEF DESCRIPTION OF THE DRAWINGS

These and the other objects, advantages and features of the invention will become apparent from the following description thereof taken in conjunction with the accompanying drawings which illustrate a specific embodiment of the invention.

In the drawings:

Fig. 1 is a block diagram showing the construction of the contents distribution system 1a;
Fig. 2 shows an example of the data structure of the product information table 122a;

Fig. 3 shows an example of the data structure of the commission information table 141a;

Fig. 4 shows an example of the data structure of the sponsor information table 143a;

Fig. 5 shows an example of the data structure of the commission bill table 142a;

Fig. 6 shows an example of the data structure of the commission information table 321a;

Fig. 7 shows an example of the data structure of the commission bill table 322a;

Fig. 8 shows an example of a screen displayed on the monitor 230a;

Fig. 9 is a flowchart showing the operation of the contents distribution system 1a;

Fig. 10 is a block diagram showing the construction of the contents distribution system 1b;

Fig. 11 shows how information is transferred in the contents distribution system 1b;

Fig. 12 is a block diagram showing the construction of the broadcast station system 100b;

Fig. 13 shows programs or the like broadcast on the channel T101;

Fig. 14 shows programs or the like broadcast on the channels T102-T124;

Fig. 15 is a block diagram showing the construction of the viewer system 200b;

Fig. 16 shows an example of the data structure of the viewing history information 261b;

Fig. 17 shows an example of the data structure of the order information 262b;

Fig. 18 shows an example of the data structure of the purchase history information 263b;

Figs. 19A-19D show examples of screens displayed on the monitor 230b;

Fig. 20 is a block diagram showing the construction of the sales apparatus 310b;

Fig. 21 is a block diagram showing the construction of the retail system 400b;

Fig. 22 shows an example of the data structure of the product information table 418b;

Fig. 23 is a block diagram showing the construction of the IC card 600b;

Fig. 24 is a flowchart showing the operation of the broadcast reception apparatus 210b, continued on Fig. 25;

Fig. 25 is a flowchart showing the operation of the broadcast reception apparatus 210b, continued from Fig. 24;

Fig. 26 is a flowchart showing the operation of the retail system 400b;

Fig. 27 is a flowchart showing the operation of the viewing history management apparatus 130b, viewing fee calculation apparatus 150b, product purchase history management apparatus 170b, product purchase history management apparatus 250b, and sales apparatus 310b, continued on Fig. 28;

Fig. 28 is a flowchart showing the operation of the viewing history management apparatus 130b, viewing fee calculation apparatus 150b, product purchase history management apparatus 170b, product purchase history management apparatus 250b, and sales apparatus 310b, continued from Fig. 27;

Fig. 29 is a block diagram showing the construction of the contents distribution system 1c;

Fig. 30 shows how information is transferred in the contents distribution system 1c;

Fig. 31 shows a program or the like broadcast on the channel T401;

Fig. 32 shows examples of screens displayed on the monitor;

Fig. 33 is a flowchart showing the operation of the broadcast reception apparatus 210c;

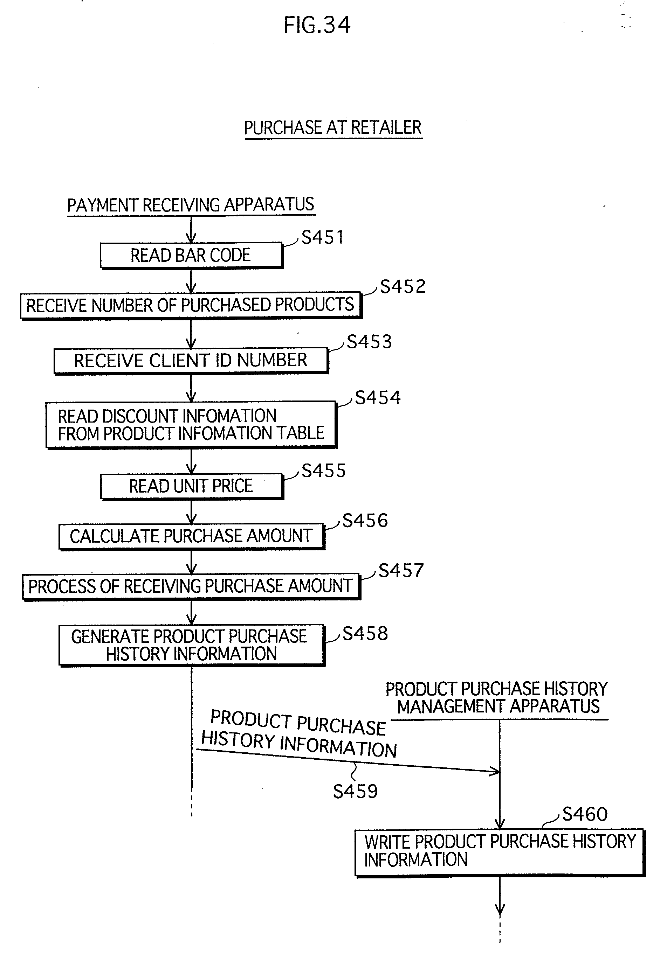

Fig. 34 is a flowchart showing the operation of the payment receiving apparatus 410c and the product purchase history management apparatus 170c;

Fig. 35 is a block diagram showing the construction of the contents distribution system 1d;

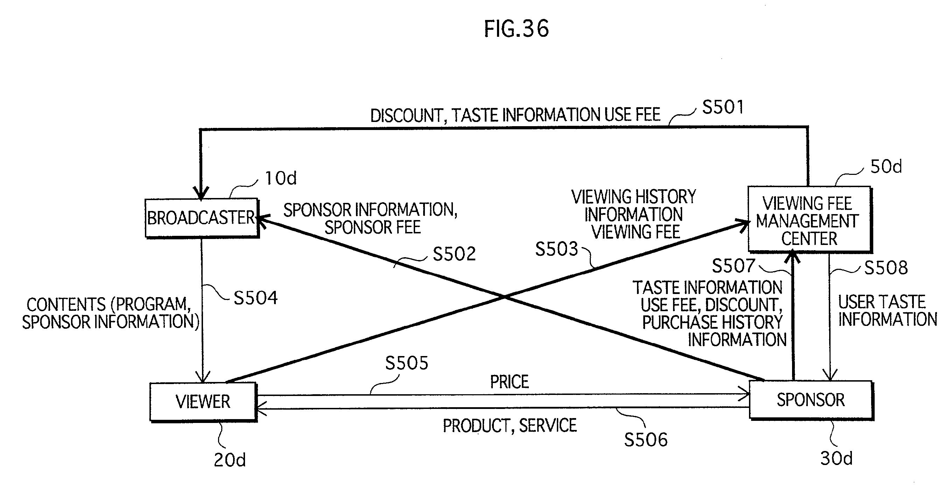

Fig. 36 shows how information is transferred in the contents distribution system 1d;

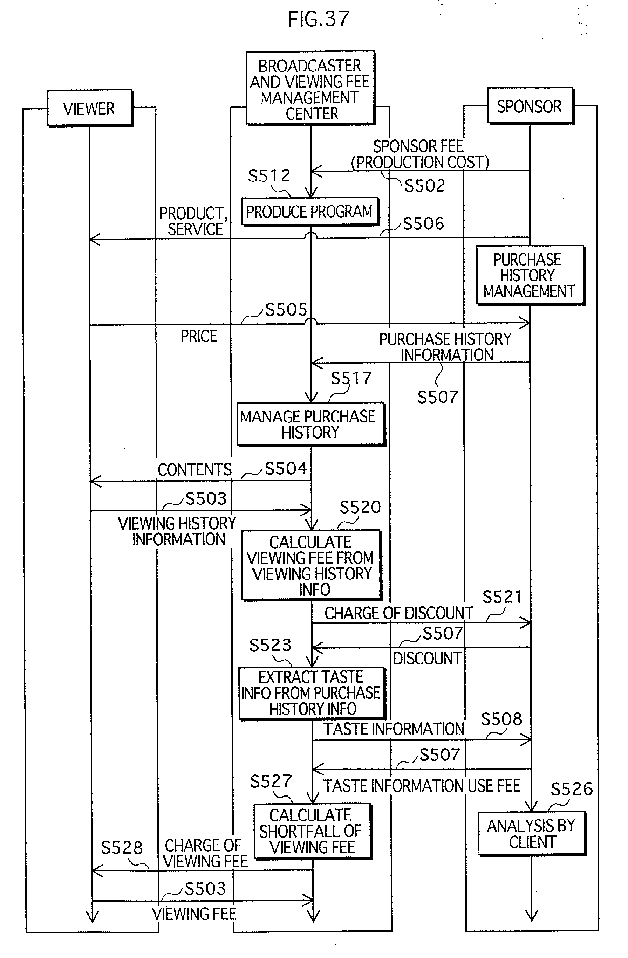

Fig. 37 shows how information is transferred in the contents distribution system 1d;

Fig. 38 shows a program or the like broadcast on the channel T501;

Fig. 39 shows an example of the screen displayed on the monitor;

Fig. 40 is a flowchart showing the operation of the broadcast reception apparatus 210d;

Fig. 41 is a flowchart showing the operation of the service fee receiving apparatus 310d;

Fig. 42 is a flowchart showing the operation of the broadcast reception apparatus 210d;

Fig. 43 is a flowchart showing the operation of the viewing history management apparatus 530d, viewing fee calculation apparatus 550d, and product purchase history management apparatus 570d, continued on Fig. 44;

Fig. 44 is a flowchart showing the operation of the viewing history management apparatus 530d, viewing fee calculation apparatus 550d, and product purchase history management apparatus 570d, continued from Fig. 43; and

Fig. 45 is a flowchart showing the operation of the product purchase history management apparatus 570d.

DESCRIPTION OF THE PREFERRED EMBODIMENT

1. Embodiment 1

The following describes a contents distribution system 1a as an embodiment of the present invention.

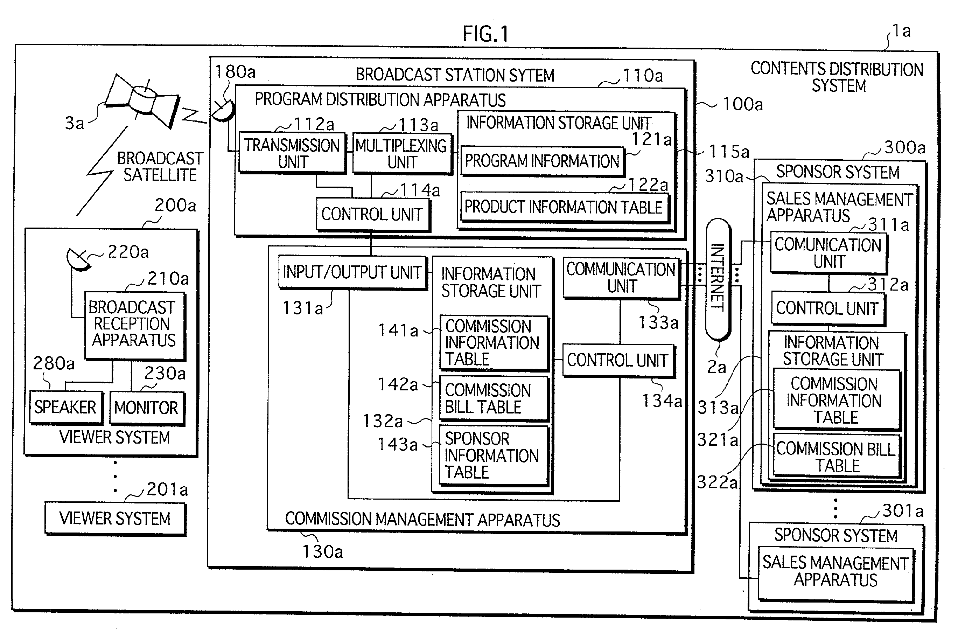

The contents distribution system 1a includes, as shown in Fig. 1, a broadcast station system 100a, a plurality of viewer systems 200a, ..., 201a, and a plurality of sponsor systems 300a, ..., 301a.

The broadcast station system 100a and the plurality of sponsor systems 300a, ..., 301a are connected to the Internet 2a.

The broadcast station system 100a is owned by a broadcaster who manages a pay digital broadcast. The broadcaster produces broadcast programs, and the broadcast station system 100a broadcasts the programs via a broadcast satellite 3a on a chargeable basis.

The sponsor system 300a is owned by a sponsor who sells their products and provides various services. The sponsor generates product information that introduces such various products and services. The sponsor system 300a outputs the product information to the broadcast station system 100a via the Internet 2a. This also applies to the other sponsor systems .

The broadcast station system 100a receives the product information from the sponsor system 300a, and broadcast the programs and the product information via the broadcast satellite 3a.

A viewer has the viewer system 200a. The viewer system 200a receives and reproduces the broadcast programs and product information. When receiving a program, the viewer pays a viewing fee for the program to the broadcaster. This also applies to the other viewer systems. The viewer can also buy a product or receive a service by referring to the broadcast product information provided by a sponsor. The viewer pays the price for the product or service to the sponsor.

When broadcasting product information, the broadcast station system 100a outputs notification information that notifies of the broadcasting of the product information, to the sponsor system 300a.

After the sponsor system 300a receives the notification information from the broadcast station system 100a, the sponsor pays a commission to the broadcaster, depending on each piece of received notification information.

The broadcaster spends the viewing fees received from the viewers and the commissions received from the sponsors in producing broadcast programs.

As shown in Fig. 1, the broadcast station system 100a includes a program distribution apparatus 110a, a commission management apparatus 130a, and a transmission antenna 180a. The viewer system 200a includes a broadcast reception apparatus 210a, a monitor 230a, a speaker 280a, and a reception antenna 220a. This also applies to the other viewer systems. The sponsor system 300a includes a sales management apparatus 310a. This also applies to the other sponsor systems.

Now, each apparatus will be described in detail.

### 1.1 Program Distribution Apparatus 110a

The program distribution apparatus 110a, as shown in Fig. 1, includes a transmission unit 112a, a multiplexing unit 113a, a control unit 114a, and an information storage unit 115a.

The program distribution apparatus 110a is achieved by a computer system that includes a microprocessor, ROM, RAM, and hard disk unit. The RAM or hard disk unit stores a computer program. The program distribution apparatus 110a achieves its function as the microprocessor operates as instructed by the computer program.

### (1) Information Storage Unit 115a

The information storage unit 115a includes program information 121a and product information table 122a.

The program information 121a contains information concerning broadcast programs, and is composed of image data and audio data.

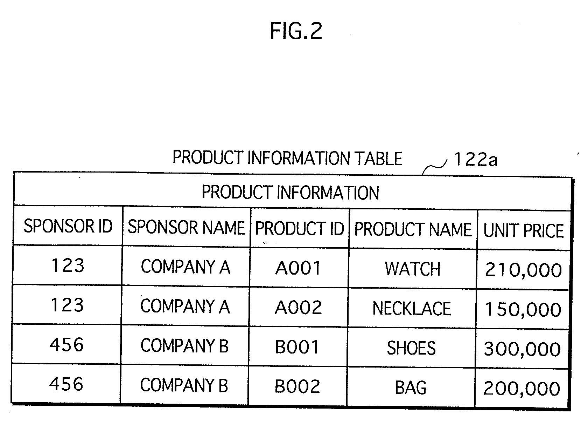

The product information table 122a is composed of a plurality of pieces of product information. Fig. 2 shows an example of the product information table 122a. Each piece of product information is provided by each sponsor, and relates to a product or a service that is broadcast together with a program. Each piece of product information includes a sponsor ID, a sponsor name, a product ID, a product name, and a price.

The sponsor ID is identification information for identifying a sponsor. The sponsor name is a name for identifying a sponsor. The product ID is identification information for identifying a product or a service sold or provided by a sponsor. The product name is a name for identifying such a product or service. The price is a price of such a product or service.

### (2) Multiplexing Unit 113a

The multiplexing unit 113a, under control of the control unit 114a, reads the program information 121a and the product information table 122a from the information storage unit 115a, extracts all pieces of product information from the read product information table 122a, multiplexes the read program information and product information, and outputs the multiplexed program information and product information to the transmission unit 112a.

### (3) Transmission Unit 112a

The transmission unit 112a receives the multiplexed program information and product information from the multiplexing unit 113a, superimposes the received multiplexed program information and product information on broadcast waves, and broadcasts the broadcast waves via the transmission antenna 180a and broadcast satellite 3a.

### (4) Control Unit 114a

The control unit 114a generates commission information by adding a date and time at which a piece of product information was broadcast, to the piece of product information in the product information table that was read from the product information table and broadcast. The control unit 114a then outputs the generated commission information to the commission management apparatus 130a.

### 1.2 Commission Management Apparatus 130a

As shown in Fig. 1, the commission management apparatus 130a is composed of an input/output unit 131a, an information storage unit 132a, a communication unit 133a, and a control unit 134a.

The commission management apparatus 130a is a computer system similar to the program distribution apparatus 110a. The commission management apparatus 130a achieves its function as the microprocessor operates as instructed by the computer program.

### (1) Information Storage Unit 132a

As shown in Fig. 1, the information storage unit 132a includes a commission information table 141a, a commission bill table 142a, and a sponsor information table 143a.

### Commission Information Table 141a

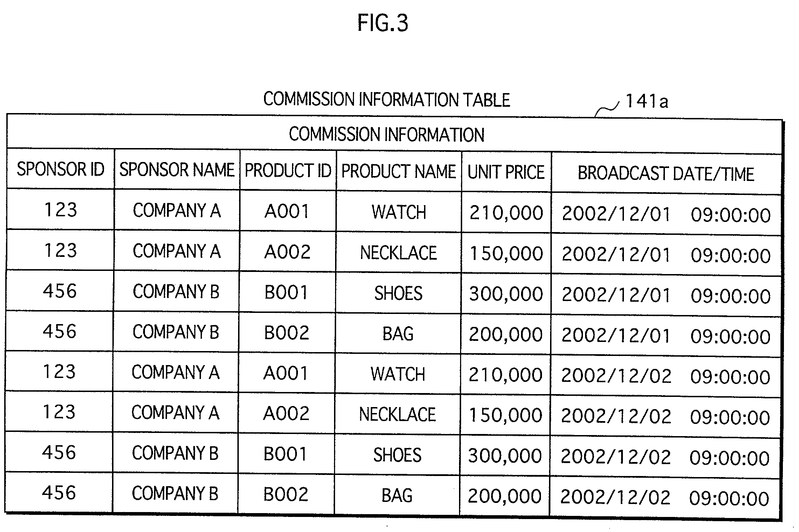

As shown in Fig. 3, the commission information table 141a is composed of a plurality of pieces of commission information. Each piece of commission information corresponds to a piece of product information broadcast by the program distribution apparatus 110a, and includes a sponsor ID, a sponsor name, a product ID, a product name, a price, and a broadcast date/time. The sponsor ID, sponsor name, product ID, product name, and price have already been described and are omitted here . The broadcast date/time shows year/month/day and hour/minute/second at which the corresponding piece of product information was broadcast.

### Sponsor Information Table 143a

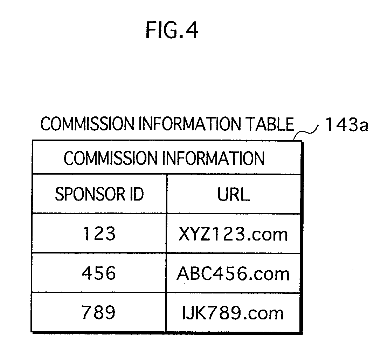

The sponsor information table 143a is composed of a plurality of pieces of sponsor information. Fig. 4 shows an example of the sponsor information table 143a. Each piece of sponsor information is composed of a sponsor ID and a URL (Uniform Resource Locator).

The sponsor ID has already been described and is omitted here.

The URL is information that indicates a location on the Internet of a sponsor system owned by a corresponding sponsor.

### Commission Bill Table 142a

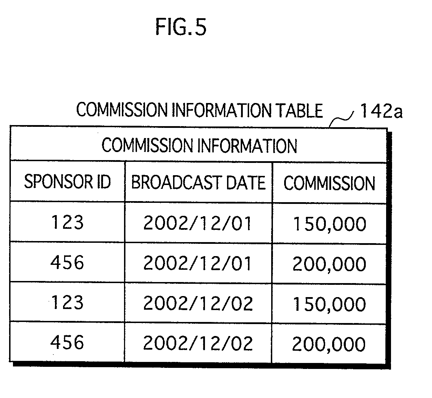

The commission bill table 142a is composed of a plurality of pieces of commission bill information. Fig. 5 shows an example of the commission bill table 142a. As shown in Fig. 5, each piece of commission bill information shows a commission to be paid by a sponsor for a broadcast on a broadcast date, and is composed of a sponsor ID, a broadcast date, and a commission.

The sponsor ID has already been explained and is omitted here.

The broadcast date shows year/month/day of a broadcast.

The commission is information of an amount to be paid or compensated by the sponsor for introduction of the product in the broadcast on the broadcast date. The commission may be electronic money information that is as valuable as the currencies and can be used instead of the currencies.

### (2) Input/Output Unit 131a

The input/output unit 131a receives the commission information from the program distribution apparatus 110a, and outputs the received information to the control unit 134a.

### (3) Control unit 134a

The control unit 134a extracts a sponsor ID from the received commission information, and determines a transmission destination of the commission information by reading a URL that corresponds to the extracted sponsor ID, from the sponsor information table 143a. The control unit 134a then transmits the received commission information to the sponsor system at the location indicated by the URL, via the communication unit 133a and the Internet 2a.

The control unit 134a also writes the received commission information into the commission information table 141a in the information storage unit 132a.

The control unit 134a also receives commission bill information from the sponsor system 300a via the Internet 2a and the communication unit 133a using a safe communication protocol, and writes the received commission bill information into the commission bill table 142a in the information storage unit 132a.

### (4) Communication Unit 133a

The communication unit 133a is connected to each sponsor system via the Internet 2a, and performs transmission/reception of information between each sponsor system and the control unit 134a.

### 1.3 Sales Management Apparatus 310a

The sales management apparatus 310a is composed of a communication unit 311a, a control unit 312a, and an information storage unit 313a.

The sales management apparatus 310a is a computer system similar to the program distribution apparatus 110a. The sales management apparatus 310a achieves its function as the microprocessor operates as instructed by the computer program.

The sales management apparatuses contained in the other sponsor systems each have the same construction as the sales management apparatus 310a, and their description is omitted here.

(1) Information Storage Unit 313a

The information storage unit 313a includes a commission information table 321a and a commission bill table 322a, as shown in Fig. 1.

Commission Information Table 321a

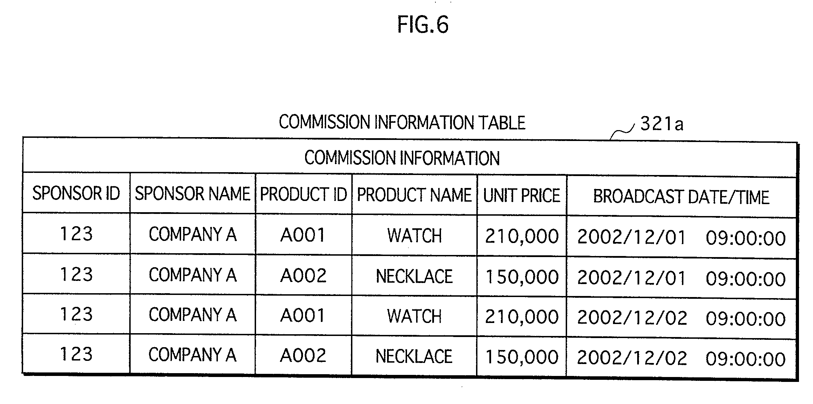

The commission information table 321a is composed of a plurality of pieces of commission information. Fig. 6 shows an example of the commission information table 321a. Each piece of commission information includes a sponsor ID, sponsor name, product ID, product name, price, and broadcast date/time. The sponsor ID, sponsor name, product ID, product name, price, and broadcast date/time have already been described and are omitted here.

Commission Bill Table 322a

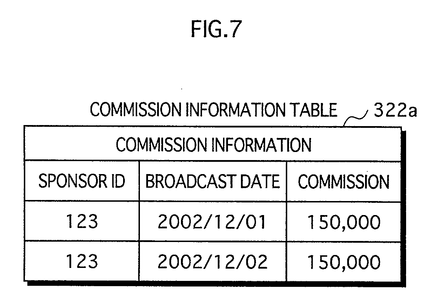

The commission bill table 322a is composed of a plurality of pieces of commission bill information. Fig. 7 shows an example of the commission bill table 322a. As shown in Fig. 7, each piece of commission bill information shows a total of commissions to be paid from a sponsor to a broadcast station for a broadcast date, and is composed of a sponsor ID, a broadcast date, and a commission. The sponsor ID, broadcast date, and commission have already been described and are omitted here. The commission is information indicating an amount paid or compensated by the sponsor for introduction of the product in the broadcast on the broadcast date, and may be electronic money information that is as valuable as the currencies and can be used instead thereof.

(2) Control Unit 312a

The control unit 312a receives the commission information from the commission management apparatus 130a via the Internet 2a and the communication unit 311a, and totals up the commissions for each day using the received commission information.

Commissions have been fixed beforehand in correspondence with pieces of commission information. Alternatively, commissions may be fixed beforehand in correspondence with products. The control unit 312a totals up the commissions from the received commission information, based on the commissions that have been fixed in such a manner. In totaling up the commissions for each day, the control unit 312a stores a cumulative total of commissions for each day that is obtained by adding up each commission calculated from each received piece of commission information.

The control unit 312a then generates commission bill information that is composed of a sponsor ID, a broadcast date, and the calculated total of commissions. It should be noted here that the commission is information indicating an amount of money equivalent to the commission paid or compensated. The commission may be electronic money information as valuable as the currencies and used instead thereof. The control unit 312a transmits the generated commission bill information to the commission management apparatus 130a via the communication unit 311a and the Internet 2a using a safe communication protocol.

The control unit 312a also writes the generated commission bill information into the commission bill table 322a in the information storage unit 313a. The commission in the commission bill information is information that indicates payment or compensation of an amount of money equivalent to the commission.

1.4 Broadcast Reception Apparatus 210a

The broadcast reception apparatus 210a receives a broadcast wave that has been broadcast by the broadcast station system 100a via the broadcast satellite 3a, selects a channel desired by the viewer from the received broadcast wave, extracts a program and product information from the selected channel, converts the extracted program and product information into images and voices, and outputs the images and voices to the monitor 230a and the speaker 280a, respectively. The monitor 230a displays the images, and the speaker 280a outputs the voices.

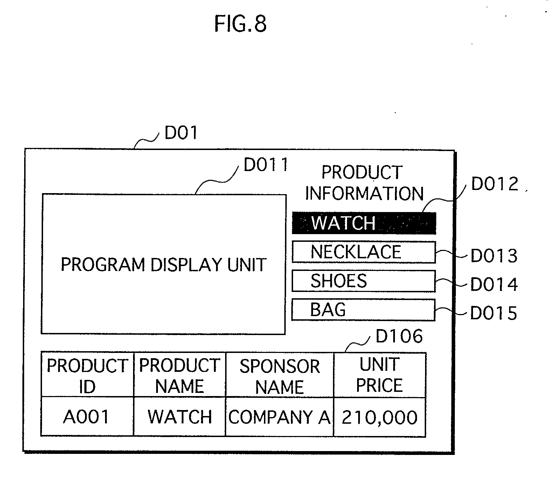

Fig. 8 shows an example of a screen displayed on the monitor 230a.

As shown in Fig. 8, a screen D01 includes a program display unit D011, a product name display units D012 to D015, and a detailed information display unit D016.

The program display unit D011 is an area in which a broadcast program is displayed in images.

The product name display units D012 to D015 are areas in which product names contained in the broadcast product information are displayed. In the example shown in Fig. 8, only the product name display unit D012 is displayed in reverse among the product name display units D012 to D015. This indicates that the product name displayed in the product name display unit D012 is selected by the viewer.

The detailed information display unit D016 is an area in which the other information than the product names in the broadcast product information is displayed. In this example, the product ID, product name, sponsor name, and price of the product selected by the viewer are displayed in the detailed information display unit D016.

### 1.5 Operation of Contents Distribution System 1a

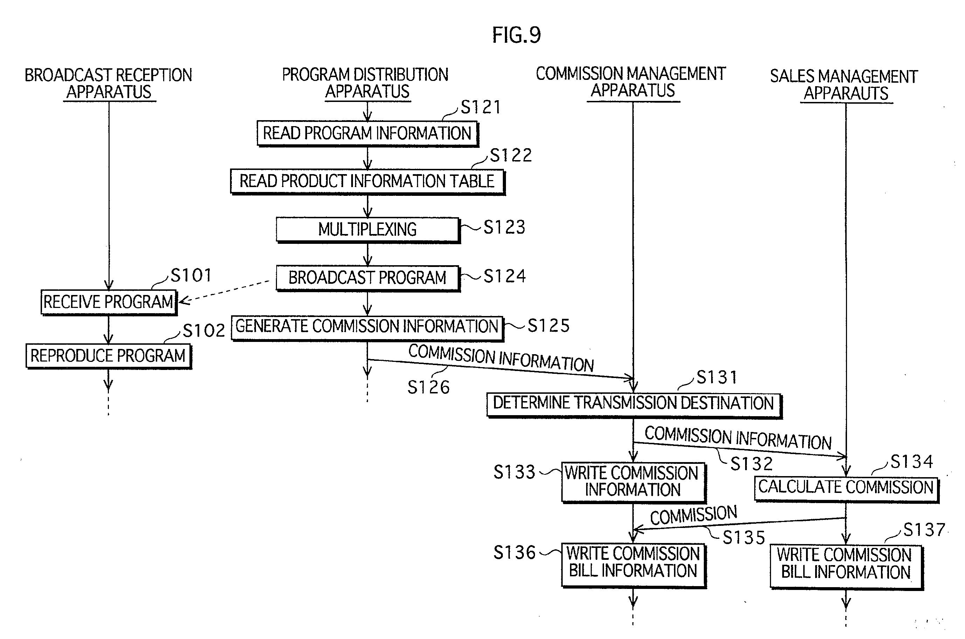

The operation of the contents distribution system 1a will be described with reference to the flowchart shown in Fig. 9.

The multiplexing unit 113a of the program distribution apparatus 110a, under control of the control unit 114a, reads the program information 121a from the information storage unit 115a (step S121), reads the product information table 122a from the information storage unit 115a (step S122), and multiplexes the read program information and product information (step S123). The transmission unit 112a superimposes the received multiplexed program information and product information on broadcast waves, and broadcasts the broadcast waves via the transmission antenna 180a and broadcast satellite 3a (step S124).

The broadcast reception apparatus 210a receives a broadcast wave (step S101), selects a channel desired by the viewer from the received broadcast wave, extracts a program and product information from the selected channel, converts the extracted program and product information into images and voices, and outputs the images and voices to the monitor 230a and the speaker 280a, respectively. The monitor 230a displays the images, and the speaker 280a outputs the voices (step S102).

The control unit 114a generates commission information from a piece of product information that was read from the product information table and broadcast (step S125), outputs the generated commission information to the commission management apparatus 130a. The input/output unit 131a receives the commission information and outputs the received commission information to the control unit 134a (step S126).

The control unit 134a extracts a sponsor ID from the received commission information, and determines a transmission destination of the commission information by reading a URL that corresponds to the extracted sponsor ID, from the sponsor information table 143a (step S131). The control unit 134a then transmits the received commission information to the sponsor system at the location indicated by the URL, via the communication unit 133a and the Internet 2a (step S132). The control unit 134a also writes the received commission information into the commission information table 141a in the information storage unit 132a (step S133).

The control unit 312a receives the commission information via the Internet 2a and the communication unit 311a (step S132), totals up the commissions for each day using the received commission information (step S134), transmits the commission bill information, which contains the calculated total of commissions, to the commission management apparatus 130a via the communication unit 311a and the Internet 2a using a safe communication protocol (step S135), and writes the generated commission bill information into the commission bill table 322a in the information storage unit 313a (step S137).

The control unit 134a receives the commission bill information via the Internet 2a and the communication unit 133a (step S135), and writes the received commission bill information into the commission bill table 142a in the information storage unit 132a (step S136).

### 2. Embodiment 2

The following describes a contents distribution system 1b as another embodiment of the present invention.

### 2.1 Overview of Contents Distribution System 1b

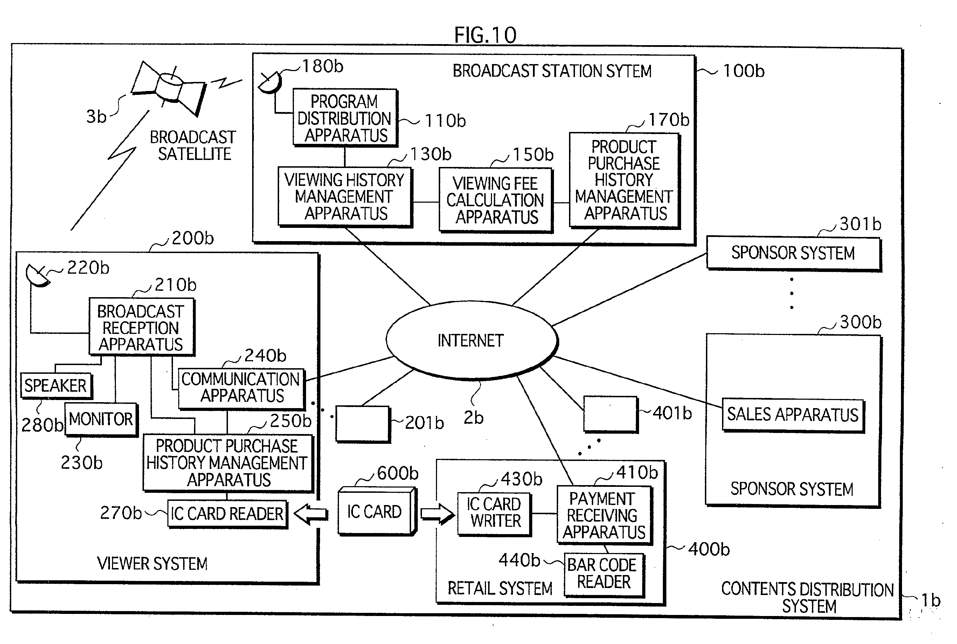

The contents distribution system 1b includes, as shown in Fig. 10, a broadcast station system 100b, a plurality of viewer systems 200b, ..., 201b, a plurality of sponsor systems 300b, ..., 301b, and a plurality of retail systems 400b, ..., 401b. Each of these systems is connected to the Internet 2b.

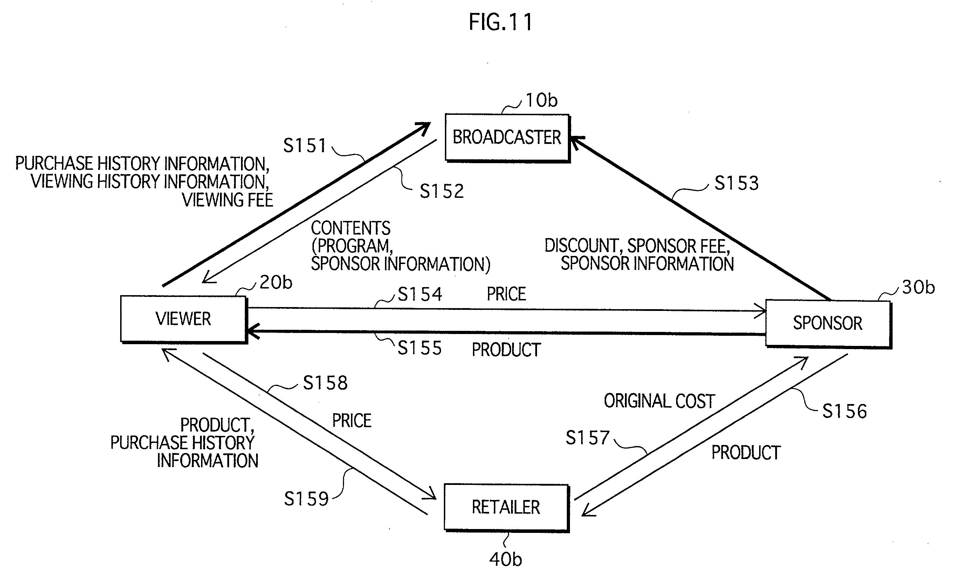

As shown in Fig. 11, a sponsor 30b, who sells various products or provides various services, pays a sponsor fee to a broadcaster 10b, the sponsor fee being used as part of the program production cost (step S153).

The broadcaster 10b, who manages a pay digital broadcast, owns the broadcast station system 100b. The broadcaster 10b produces a program. The broadcast station system 100b provides the program (that is, a content) to viewers by broadcasting the program via a broadcast satellite 3b on a chargeable basis (step S152).

The sponsor 30b owns the sponsor system 300b. The sponsor 30b generates sponsor information that introduces such various products and services that the sponsor sells or provides. The sponsor system 300b outputs the sponsor information to the broadcast station system 100b via the Internet 2a (step S153).

The broadcast station system 100b receives the sponsor information from the sponsor system 300b (step S153), and provides the sponsor information (that is, a content) to viewers by broadcasting it together with the program, via the broadcast satellite 3b (step S152).

A viewer 20b has the viewer system 200b. The viewer system 200b receives (step S152) and reproduces the broadcast programs and sponsor information. The viewer 20b transmits viewing history information to the broadcaster 10b (step S151).

The viewer 20b recognize the products or services the sponsor sells or provides, watching the broadcast sponsor information, and buys a product or receive a service (step S155). In doing so, the viewer 20b pays the price to the sponsor (step S154). Alternatively, the viewer 20b buys a product or receives a service from a retailer 40b (step S159). In this case, the viewer 20b pays the price to the retailer 40b (step S158). Also, the viewer 20b receives purchase history information that shows the history of buying products or obtaining services, from the retailer 40b via an IC card 600b (step S159).

The broadcaster 10b receives the viewing history information and the purchase history information from the viewer 20b (step S151). The broadcaster 10b then calculates a provisional fee to be charged to the viewer 20b for viewing programs based on the viewing history information, calculates a discount based on the purchase history information, and charges the viewer 20b a viewing fee obtained by subtracting the discount from the provisional fee. The viewer 20b pays the viewing fee to the broadcaster 10b (step S151).

The broadcaster 10b charges the sponsor 30b the discount of the viewing fee. The sponsor 30b pays the discount to the broadcaster 10b (step S153).

The broadcaster 10b appropriates the viewing fee received from the viewer 20b and the sponsor fee and the discount of the viewing fee received from the sponsor 30b to the program production cost.

As shown in Fig. 10, the broadcast station system 100b includes a program distribution apparatus 110b, a viewing history management apparatus 130b, a viewing fee calculation apparatus 150b, a product purchase history management apparatus 170b, and a transmission antenna 180b. The viewer system 200b includes a broadcast reception apparatus 210b, a monitor 230b, a speaker 280b, a reception antenna 220b, a communication apparatus 240b, a product purchase history management apparatus 250b, and an IC card reader 270b. This also applies to the other viewer systems. The sponsor system 300b includes a sales apparatus 310b. This also applies to the other sponsor systems. The retail system 400b includes a payment receiving apparatus 410b, an IC card writer 430b, and a bar code reader 440b. This also applies to the other retail systems.

Now, each apparatus will be described in detail.

### 2.2 Program Distribution Apparatus 110b

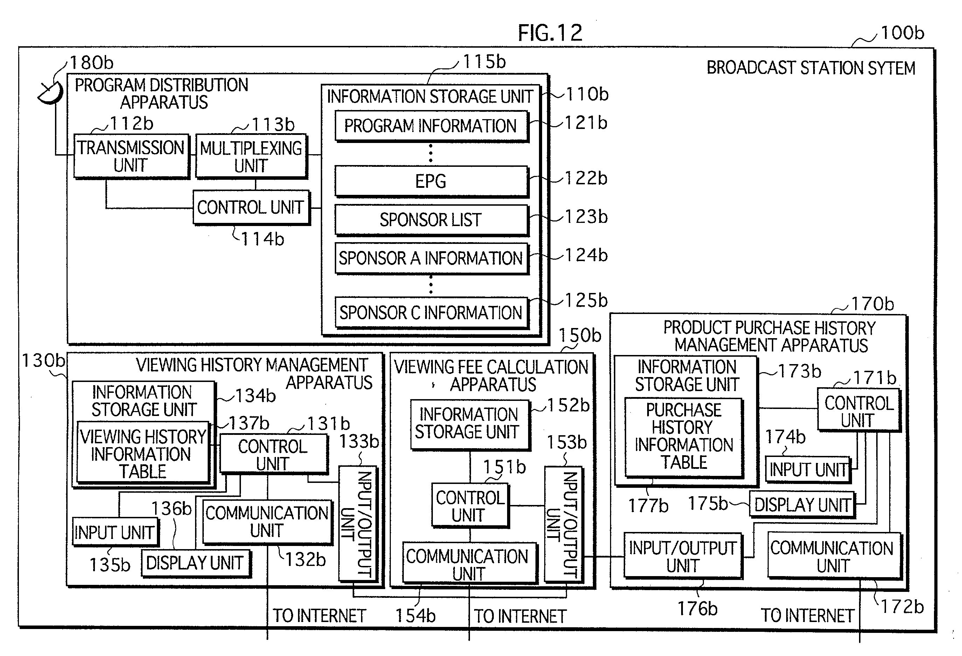

The program distribution apparatus 110b, as shown in Fig. 12, includes a transmission unit 112b, a multiplexing unit 113b, a control unit 114b, and an information storage unit 115b.

The program distribution apparatus 110b is achieved by a computer system that includes a microprocessor, ROM, RAM or the like. The RAM stores a computer program. The program distribution apparatus 110b achieves its function as the microprocessor operates as instructed by the computer program.

### (1) Information Storage Unit 115b

The information storage unit 115b includes program information 121b, other program information that is not illustrated, an EPG (Electronic Program Guide) 122b, a sponsor list 123b, and sponsor A information 124b, ..., sponsor C information 125b.

The program information 121b is composed of image data and audio data. This also applies to the other pieces of program information.

The EPG 122b is information constituting an electronic program guide that introduces programs.

The sponsor list 123b contains a plurality of sponsor names and sponsor IDs.

The sponsor A information 124b is information regarding the products or services sold or provided by sponsor A, and is composed of a sponsor name, a sponsor ID, an expiration date, a message, a URL, image information, a product name, a product ID, and a price. This also applies to the other pieces of sponsor information.

The sponsor name is a name for identifying a sponsor. The sponsor ID is identification information for identifying a sponsor. The expiration date indicates a period in which the sponsor guarantees the viewers the contents of each piece of information contained in the sponsor A information 124b. The message is information the sponsor wants to convey to the viewers, in regard with the products, services or the like . It is presumed here as an example that the message includes information concerning a discount rate of the viewing fee. The URL is information that indicates a location on the Internet of a sponsor system owned by the sponsor who provides the sponsor A information 124b. The image information represents an image of a product or a service indicated by the product ID in the sponsor A information 124b. The product name is a name for identifying a product or a service sold or provided by the sponsor. The product ID is identification information for uniquely identifying the product or service. The price is a price of the product or service.

### (2) Transmission Unit 112b, Multiplexing Unit 113b, Control Unit 114b

The control unit 114b reads, from the information storage unit 115b, the program information 121b, other program information, EPG 122b, sponsor list 123b, and sponsor A information 124b, ..., sponsor C information 125b, multiplexes these pieces of information for one channel, and transmits the multiplexed information on the channel.

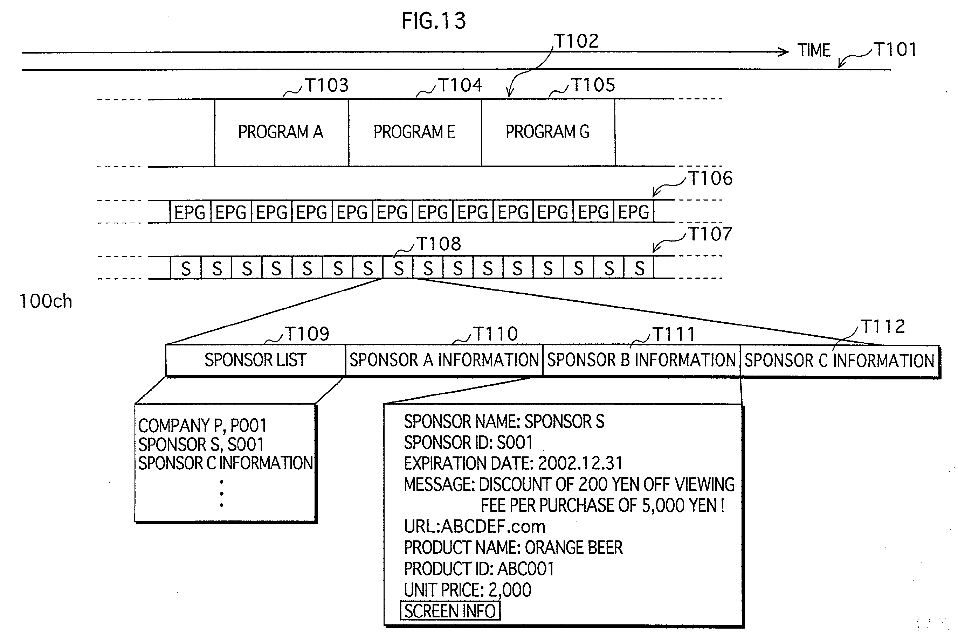

A specific example of the above operation will be described with reference to Fig. 13. A program stream T102, an EPG stream T106, and a sponsor-related information stream T107 are multiplexed and broadcast on a channel T101 "100ch". The program stream T102 includes a program A, a program E, a program G, and other programs. The EPG stream T106 includes a plurality of EPGs. The sponsor-related information stream T107 includes a plurality of pieces of sponsor-related information (indicated by "S" in the drawings). Each piece of sponsor-related information includes a sponsor list T109, sponsor A information T110, sponsor B information T111, and sponsor C information T112. The sponsor list and the sponsor information have been explained earlier.

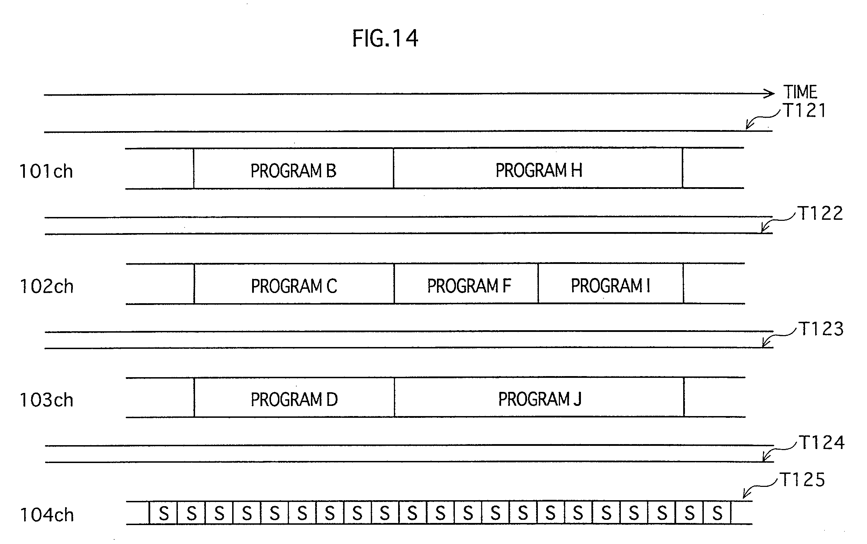

As shown in Fig. 14 as an example, other channels also broadcast program information and sponsor-related information. A program stream containing programs B and H is broadcast on a channel T121 "101ch". A program stream containing programs C, F, and I is broadcast on a channel T122 "102ch". A program stream containing programs D and J is broadcast on a channel T123 "103ch". A sponsor-related information stream T125 is broadcast on a channel T124 "104ch". The sponsor-related information stream T125 includes a plurality of pieces of sponsor-related information (indicated by "S" in the drawings) . The channel T124 "104ch" is a sponsor-related-information-specific channel that is dedicated to presenting sponsor-related information. It is possible for viewers to check the sponsors of the programs or available products by referring to the sponsor-related-information-specific channel. The sponsor-related-information-specific channel provides information such as product information, expiration dates for buying the products, and discounts of viewing fees that are shared by the sponsors if products are bought by the viewers.

### 2.3 Viewing History Management Apparatus 130b

As shown in Fig. 12, the viewing history management apparatus 130b is composed of a control unit 131b, a communication unit 132b, an input/output unit 133b, an information storage unit 134b, an input unit 135b, and a display unit 136b.

The viewing history management apparatus 130b is a computer system similar to the program distribution apparatus 110b. The viewing history management apparatus 130b achieves its function as the microprocessor operates as instructed by the computer program.

### (1) Information Storage Unit 134b

The information storage unit 134b includes a viewing history information table 137b.

The viewing history information table 137b has an area for storing a plurality of pieces of viewing history information .

The viewing history information shows a history of programs having been viewed by a viewer, and includes a viewer ID, a viewer name, a channel number, a program name, and a viewing date/time.

The viewer ID is identification information for identifying a viewer uniquely. The viewer name is a name for identifying the viewer. The channel number indicates a channel in which a program was broadcast. The program name is a name for identifying the program. The viewing date/time indicates a date/time at which the program was viewed by the viewer.

### (2) Control unit 131b

The control unit 131b receives the viewing history information from the broadcast reception apparatus 210b via the Internet 2b and the communication unit 132b. The control unit 131b writes the received viewing history information into the viewing history information table 137b in the information storage unit 134b.

The control unit 131b receives a request to read the viewing history information, from the viewing fee calculation apparatus 150b via the input/output unit 133b. Upon receiving the request, the control unit 131b reads the viewing history information from the viewing history information table 137b in the information storage unit 134b, and outputs the read viewing history information to the viewing fee calculation apparatus 150b via the input/output unit 133b.

### (3) Communication Unit 132b, Input/Output Unit 133b, Input Unit 135b, Display Unit 136b

The communication unit 132b is connected to an external apparatus via the Internet 2b, and performs transmission/reception of information between the external apparatus and the control unit 131b. The input/output unit 133b performs transmission/reception of information between the control unit 131b and the viewing fee calculation apparatus 150b.

The input unit 135b receives an instruction from the operator through an operation.

The display unit 136b displays various types of information.

### 2.4 Viewing Fee Calculation Apparatus 150b

As shown in Fig. 12, the viewing fee calculation apparatus 150b is composed of a control unit 151b, an information storage unit 152b, an input/output unit 153b, and a communication unit 154b.

The viewing fee calculation apparatus 150b is a computer system similar to the program distribution apparatus 110b. The viewing fee calculation apparatus 150b achieves its function as the microprocessor operates as instructed by the computer program.

### (1) Control Unit 151b

The control unit 151b receives the viewing history information from the viewing history management apparatus 130b via the input/output unit 153b. The control unit 151b then calculates a viewing fee based on the received viewing history information. The viewing fee is calculated in accordance with the channel number, program name, viewing date/time or the like contained in the viewing history information.

The control unit 151b also receives the purchase history information from the product purchase history management apparatus 170b. The control unit 151b then calculates a discount based on the discount information contained in the purchase history information.

The control unit 151b also calculates an amount to be charged to the viewer, using the following equation.

$$Charged\ amount = viewing\ fee - discount$$

Furthermore, the control unit 151b charges the viewer the calculated amount.

Also, the control unit 151b transmits the purchase history information and a charge of the calculated discount to the sales apparatus 310b via the communication unit 154b and the Internet 2b.

(2) Information Storage Unit 152b, Input/Output Unit 153b, Communication Unit 154b

The information storage unit 152b stores various types of information.

The communication unit 154b is connected to an external apparatus via the Internet 2b, and performs transmission/reception of information between the external apparatus and the control unit 151b. The input/output unit 153b performs transmission/reception of information between the control unit 151b and the product purchase history management apparatus 170b.

2.5 Product Purchase History Management Apparatus 170b

As shown in Fig. 12, the product purchase history management apparatus 170b is composed of a control unit 171b, a communication unit 172b, an information storage unit 173b, an input unit 174b, a display unit 175b, and an input/output unit 176b.

The product purchase history management apparatus 170b is a computer system similar to the program distribution apparatus 110b. The product purchase history management apparatus 170b achieves its function as the microprocessor operates as instructed by the computer program.

(1) Control unit 171b

The control unit 171b transmits a request to read the purchase history information, to the product purchase history management apparatus 250b via the communication unit 172b and the Internet 2b.

The control unit 171b receives the purchase history information from the product purchase history management apparatus 250b via the Internet 2b and the communication unit 172b, and outputs the received purchase history information to the viewing fee calculation apparatus 150b via the input/output unit 176b.

(2) Communication Unit 172b, Information Storage Unit 173b, Input Unit 174b, Display Unit 175b, Input/Output Unit 176b

The information storage unit 173b stores a purchase history information table 177b.

The communication unit 172b is connected to an external apparatus via the Internet 2b, and performs transmission/reception of information between the external apparatus and the control unit 171b. The input/output unit 176b performs transmission/reception of information between the control unit 171b and the viewing fee calculation apparatus 150b.

The input unit 174b receives an instruction from the operator through an operation.

The display unit 175b displays various types of information.

2.6 Broadcast Reception Apparatus 210b

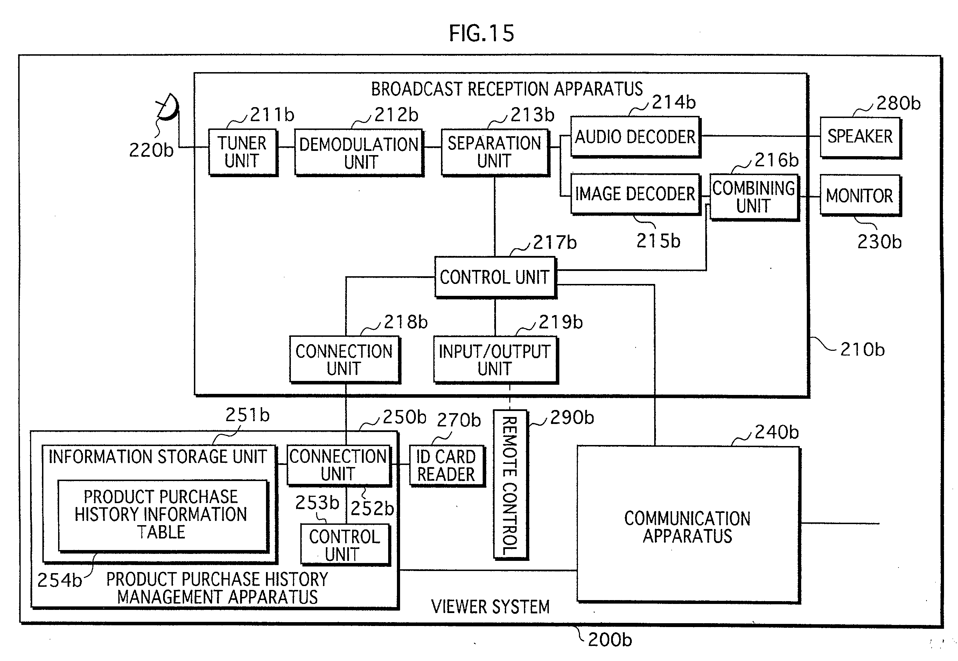

As shown in Fig. 15, the broadcast reception apparatus 210b is composed of a tuner unit 211b, a demodulation unit 212b, a separation unit 213b, an audio decoder 214b, an image decoder 215b, a combining unit 216b, a control unit 217b, a connection unit 218b, and an input/output unit 219b.

The broadcast reception apparatus 210b is a computer system similar to the program distribution apparatus 110b. The broadcast reception apparatus 210b achieves its function as the microprocessor operates as instructed by the computer program.

(1) Remote Control 290b and Input/Output Unit 219b

A remote control 290b receives various instructions or specifications fromauser, and outputs the received instructions or specifications to the input/output unit 219b. The input/output unit 219b receives the user instructions or specifications and outputs the received instructions or specifications to the control unit 217b.

A viewer (user) uses the remote control 290b to input: an instruction to display the EPG screen; a specification of a program selected on the EPG screen; an instruction to display the sponsor list; a specification of a selected sponsor; an instruction to display an order screen on which the user can order a product or a service from the sponsor; various numerals; a placement of order for a product or a service to the sponsor; and an instruction to display the selected program which the user wants to view.

(2) Control Unit 217b

The control unit 217b receives the following from the user via the remote control 290b and the input/output unit 219b: an instruction to display the EPG screen; a specification of a program; an instruction to display the sponsor list; a specification of a selected sponsor; an instruction to display the order screen; various numerals; a placement of order to the sponsor; and an instruction to display a program.

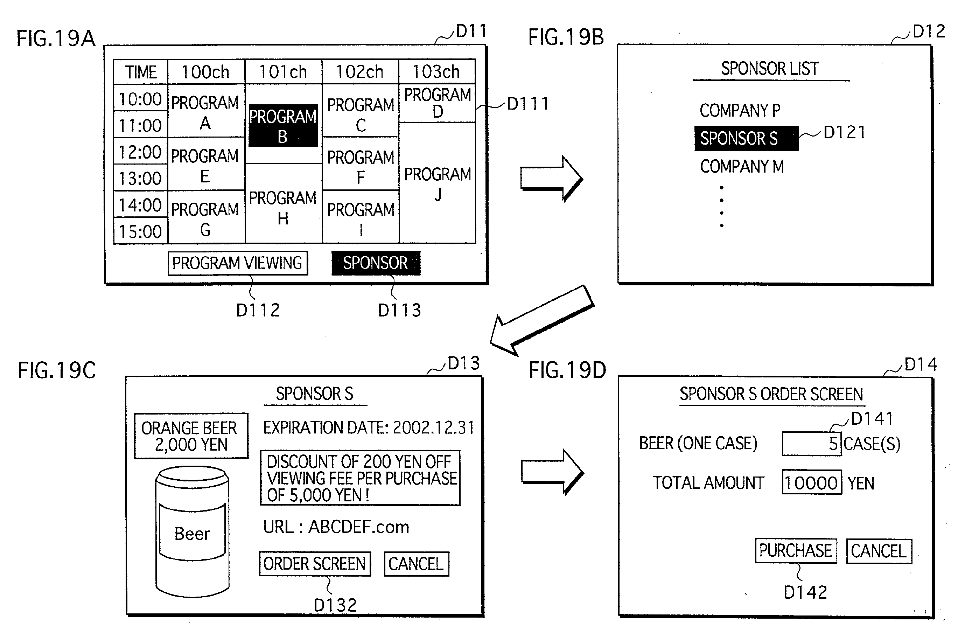

Upon receiving the instruction to display the EPG screen, the control unit 217b controls the reception antenna 220b, tuner unit 211b, demodulation unit 212b, and separation unit 213b to receive an EPG being broadcast. With this operation, an EPG screen D11 shown in Fig. 19A, for example, is displayed.

Upon receiving a specification of a program and then an instruction to display the specified program, the control unit 217b controls the reception antenna 220b, tuner unit 211b, demodulation unit 212b, and separation unit 213b to receive the program.

Upon receiving an instruction to display the sponsor list, the control unit 217b controls the reception antenna 220b, tuner unit 211b, demodulation unit 212b, and separation unit 213b to receive the sponsor list. With this operation, a sponsor list screen D12 shown in Fig. 19B, for example, is displayed.

Upon receiving a specification of a selected sponsor, the control unit 217b controls the reception antenna 220b, tuner unit 211b, demodulation unit 212b, and separation unit 213b to receive the sponsor information regarding the specified sponsor. With this operation, a sponsor information screen D13 shown in Fig. 19C, for example, is displayed.

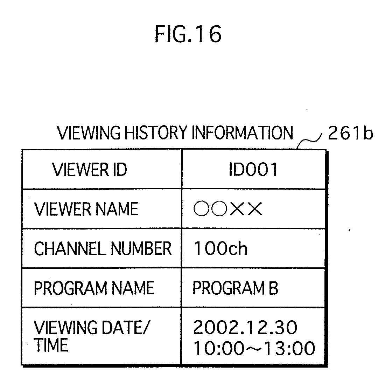

The control unit 217b also generates viewing history information based on an instruction to display a program input by the viewer. Fig. 16 shows an example of the viewing history information 261b. The viewing history information 261b is, as shown in Fig. 16, composed of a viewer ID, a viewer name, a channel number, a program name, and a viewing date/time. The viewer ID, viewer name, channel number, program name, and viewing date/time have already been described, and are omitted here. The control unit 217b transmits the generated viewing history information to the viewing history management apparatus 130b of the broadcast station system 100b via the communication apparatus 240b and the Internet 2b.

Upon receiving an instruction to display the order screen, the control unit 217b extracts a URL from the sponsor information, and transmits the extracted URL and a request for order screen information to the sales apparatus 310b via the communication apparatus 240b and the Internet 2b.

The control unit 217b receives the order screen information from the sales apparatus 310b via the Internet 2b and the communication apparatus 240b, generates an order screen based on the received order screen information as shown in Fig. 19D, and outputs the generated order screen to the monitor 230b via the combining unit 216b. With this operation, the order screen D14 is displayed.

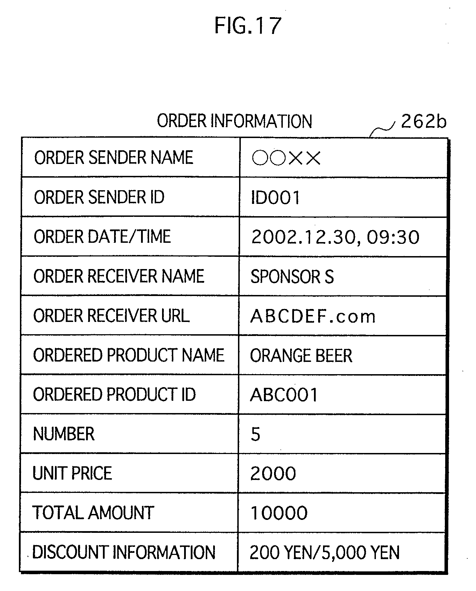

Upon receiving a specification of the number of products and a placement of order for the products or services, the control unit 217b generates order information based on information displayed on the order screen D14 regarding the products or services and the specified number of products. Fig. 17 shows an example of order information 262b. As shown in Fig. 17, the order information 262b is composed of an order sender name, an order sender ID, an order date/time, an order receiver name, an order receiver URL, an ordered product name, an ordered product ID, a number, a unit price, a total amount, and discount information. Here, the order sender name is a name for identifying a person (namely, a viewer) who placed an order. The order sender ID is identification information for identifying the person (viewer) who placed the order. The order date/time indicates the date and time at which the order for a product or service was placed. The order receiver name is a name of a sponsor who sells products or provides services. The order receiver URL indicates a location of a sponsor system of the sponsor. The ordered product name indicates a name of the ordered product or service. The ordered product ID is identification information for identifying the product or service uniquely. The number is the number of ordered products or services. The unit price is the unit price of the ordered product or service. The total amount indicates a value obtained by multiplying the unit price by the number of ordered products or services. The discount information indicates a discount rate of the viewing fee. The control unit 217b then transmits the generated order information to the sales apparatus 310b via the communication apparatus 240b and the Internet 2b.

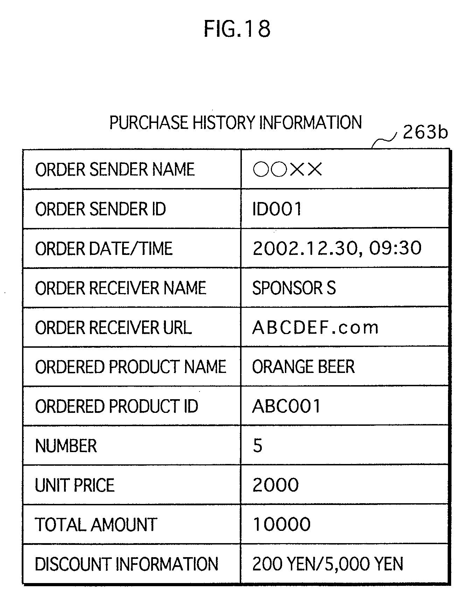

The control unit 217b also generates the purchase history information based on information displayed on the order screen D14 regarding the products or services and the received number of products. Fig. 18 shows an example of purchase history information 263b. As shown in Fig. 18, the purchase history information 263b is composed of an order sender name, an order sender ID, an order date/time, an order receiver name, an order receiver URL, an ordered product name, an ordered product ID, a number, a price, a total amount, and discount information. The order sender name, order sender ID, order date/time, order receiver name, order receiver URL, ordered product name, ordered product ID, number, price, total amount, and discount information have already been described and are omitted here. The control unit 217b then outputs the generated purchase history information to the product purchase history management apparatus 250b via the connection units 218b and 252b.

(2) Tuner Unit 211b, Demodulation Unit 212b, Separation Unit 213b

Under control of the control unit 217b, the tuner unit 211b selects a broadcast wave that is broadcast on a channel selected by the user. Under control of the control unit 217b, the demodulation unit 212b demodulates the signal of the selected broadcast wave. Under control of the control unit 217b, the separation unit 213b extracts the program information, EPG or the like from the demodulated signal.

(3) Image Decoder 215b, Audio Decoder 214b and Combining unit 216b

The image decoder 215b decodes image data, and outputs the decoded image data to the monitor 230b via the combining unit 216b.

The combining unit 216b combines the image generated by the image decoder 215b with the image generated by the control unit 217b, and outputs the combination result image to the monitor 230b.

The audio decoder 214b decodes the audio data, and outputs the decoded audio data to the speaker 280b.

(4) Connection Unit 218b

The connection unit 218b is connected to the product purchase history management apparatus 250b, and performs transmission/reception of information between the control unit 217b and the product purchase history management apparatus 250b.

2.7 Product Purchase History Management Apparatus 250b

The product purchase history management apparatus 250b is, as shown in Fig. 15, composed of an information storage unit 251b, a connection unit 252b, and a control unit 253b.

The product purchase history management apparatus 250b is a computer system similar to the program distribution apparatus 110b. The product purchase history management apparatus 250b achieves its function as the microprocessor operates as instructed by the computer program.

(1) Information Storage Unit 251b

The information storage unit 251b includes a product purchase history management table 254b. The product purchase history management table 254b has an area for storing a plurality of pieces of product purchase history information. The purchase history information has already been described and therefore is omitted here.

(2) Control Unit 253b

The control unit 253b receives the purchase history information from the broadcast reception apparatus 210b via the connection unit 252b, and writes the received purchase history information into the product purchase history management table 254b in the information storage unit 251b.

After the IC card 600b is inserted into the IC card reader 270b, the control unit 253b reads the purchase history information from the IC card 600b via the IC card reader 270b and the connection unit 252b, and writes the read purchase history information into the product purchase history management table 254b in the information storage unit 251b.

When receiving a request to read the purchase history information, from the product purchase history management apparatus 170b via the Internet 2b and the communication apparatus 240b, the control unit 253b reads the purchase history information from the product purchase history management table 254b in the information storage unit 251b, and transmits the read purchase history information to the product purchase history management apparatus 170b via the communication apparatus 240b and the Internet 2b.

(3) Connection Unit 252b

The connection unit 252b is connected to the broadcast reception apparatus 210b, and performs transmission/reception of information between the broadcast reception apparatus 210b and the control unit 253b. The connection unit 252b is also connected to the IC card reader 270b, and receives information from the IC card reader 270b and outputs the received information to the control unit 253b.

2.8 Communication Apparatus 240b

The communication apparatus 240b is connected to an external apparatus via the Internet 2b. The communication apparatus 240b performs transmission/reception of information between the external apparatus and the broadcast reception apparatus 210b. The communication apparatus 240b also performs transmission/reception of information between the external apparatus and the product purchase history management apparatus 250b.

2.9 Sales Apparatus 310b

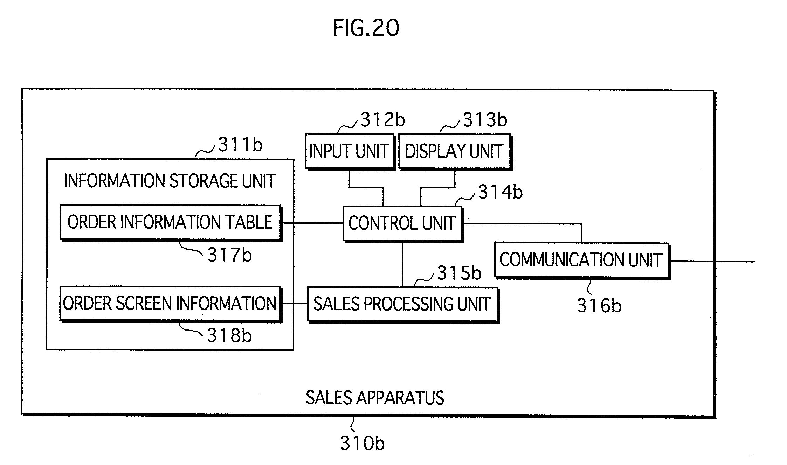

The sales apparatus 310b is, as shown in Fig. 20, composed of an information storage unit 311b, an input unit 312b, a display unit 313b, a control unit 314b, a sales processing unit 315b, and a communication unit 316b.

The sales apparatus 310b is a computer system similar to the program distribution apparatus 110b.

The sales apparatus 310b achieves its function as the microprocessor operates as instructed by the computer program.

## (1) Information Storage Unit 311b

The information storage unit 311b includes an order information table 317b and an order screen information 318b.

The order information table 317b has an area for storing a plurality of pieces of order information. The order information has already been explained and is omitted here.

The order screen information 318b is composed of information that is used to form the order screen D14 shown in Fig. 19.

## (2) Control Unit 314b

When receiving a URL and a request for order screen information from the broadcast reception apparatus 210b via the Internet 2b and the communication unit 316b, the control unit 314b reads the order screen information 318b from the information storage unit 311b, and transmits the read order screen information to the broadcast reception apparatus 210b of the viewer system 200b via the communication unit 316b and the Internet 2b.

When receiving the order information from the broadcast reception apparatus 210b via the Internet 2b and the communication unit 316b, the control unit 314b writes the received order screen information into the order information table 317b in the information storage unit 311b.

When receiving purchase history information and a discount from the viewing fee calculation apparatus 150b via the Internet 2b and the communication unit 316b, the control unit 314b calculates a discount based on the received purchase history information, and judges whether the calculated discount matches the received discount. If they match, the control unit 314b performs a process of paying the discount to the broadcaster.

If they do not match, the control unit 314b performs another process, such as displaying a message that indicates the fact.

## (3) Sales Processing Unit 315b

The sales processing unit 315b performs a process of selling products or services using the order information stored in the order information table 317b.

## (4) Input Unit 312b, Display Unit 313b, Communication Unit 316b

The input unit 312b receives instructions input by an operator.

The display unit 313b displays various types of information.

The communication unit 316b is connected to an external apparatus via the Internet 2b, and performs transmission/reception of information between the control unit 315 and the external apparatus.

## 2.10 Payment receiving Apparatus 410b

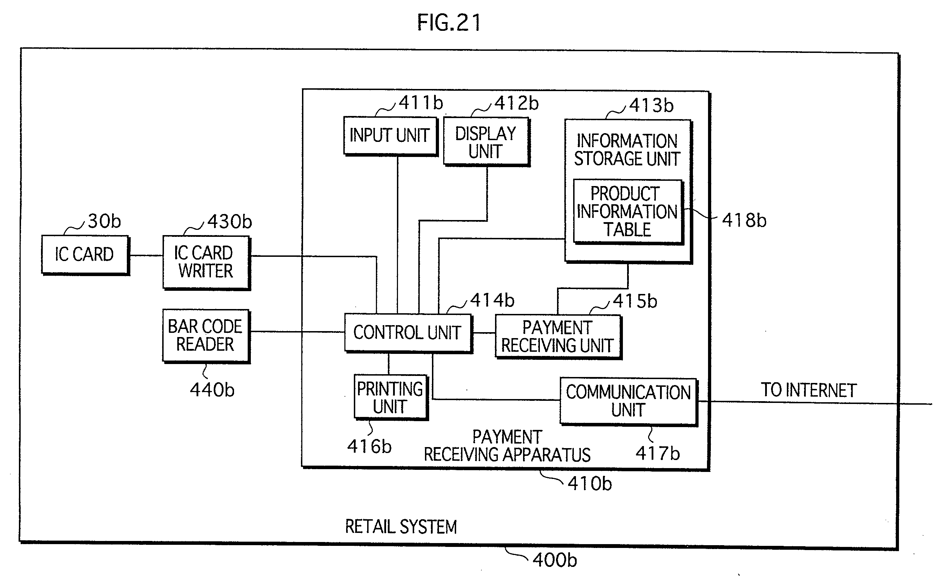

The payment receiving apparatus 410b is, as shown in Fig. 21, composed of an input unit 411b, a display unit 412b, an information storage unit 413b, a control unit 414b, a payment receiving unit 415b, a printing unit 416b, and a communication unit 417b. The IC card writer 430b and bar code reader 440b are connected to the payment receiving apparatus 410b.

The payment receiving apparatus 410b is a computer system similar to the program distribution apparatus 110b. The payment receiving apparatus 410b achieves its function as the microprocessor operates as instructed by the computer program.

It is presumed here that an IC card 600b owned by a viewer is inserted into the IC card writer 430b connected to the payment receiving apparatus 410b.

## (1) Information Storage Unit 413b

The information storage unit 413b includes a product information table 418b.

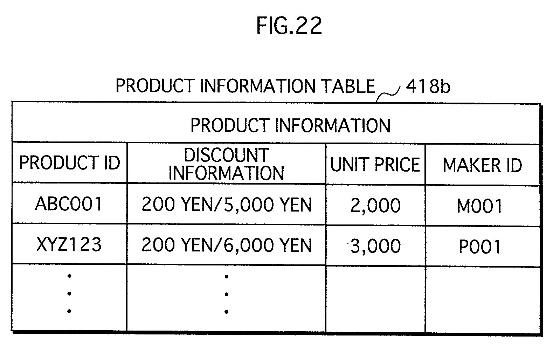

Fig. 22 shows an example of the product information table 418b. As shown in Fig. 22, the product information table 418b is composed of a plurality of pieces of product information. Each piece of product information includes a product ID, discount information, a unit price, and a maker ID.

The product ID is identification information for uniquely identifying a product or a service. The discount information indicates a discount rate of the viewing fee. The unit price is the unit price of a product or service. The maker ID is identification information for identifying the maker, namely the sponsor of the product or service.

## (2) Control Unit 414b

The control unit 414b obtains a product ID from a bar code attached to a product or a package of the product, via the bar code reader 440b.

The control unit 414b then receives information indicating the number of products or services from a retailer via the input unit 411b, reads a piece of discount information and a unit price corresponding to the obtained product ID, from the product information table 418b in the information storage unit 413b.

The control unit 414b then calculates a purchase amount by multiplying the unit price by the number of products or services, and outputs information showing the calculated purchase amount to the payment receiving unit 415b.

The control unit 414b then generates product purchase history information based on the retailer name, product information, the number of purchased products or services, purchase amount, and purchase date/time, and outputs the generated product purchase history information to the IC card 600b via the IC card writer 430b.

(3) Payment Receiving Unit 415b

The payment receiving unit 415b receives information indicating a purchase amount from the control unit 414b, and performs a process of receiving the purchase amount.

(4) Communication Unit 417b

The communication unit 417b is connected to an external apparatus via the Internet 2b, and performs transmission/reception of information between the control uit 414b and the external apparatus.

(5) Input Unit 411b, Display Unit 412b, Printing Unit 416b

The input unit 411b receives instructions input by an operator.
The display unit 412b displays various types of information under control of the control unit 414b.
The printing unit 416b prints out various types of information under control of the control unit 414b.

2.11 IC Card 600b

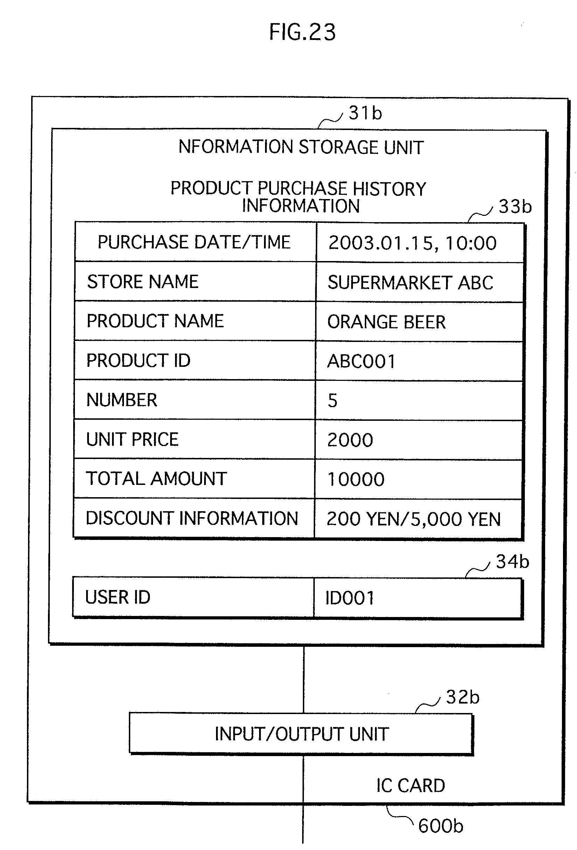

The IC card 600b is a card-type recording medium in which a semiconductor memory is embedded, and as shown in Fig. 23, is composed of an information storage unit 31b and an input/output unit 32b.
The input/output unit 32b of the IC card 600b receives product purchase history information from the payment receiving apparatus 410b via the IC card writer 430b, and writes the received product purchase history information into the information storage unit 31b.

2.12 Operation of Contents Distribution System 1b

Now, the operation of the contents distribution system 1b will be described.

(1) Operation of Broadcast Reception Apparatus 210b

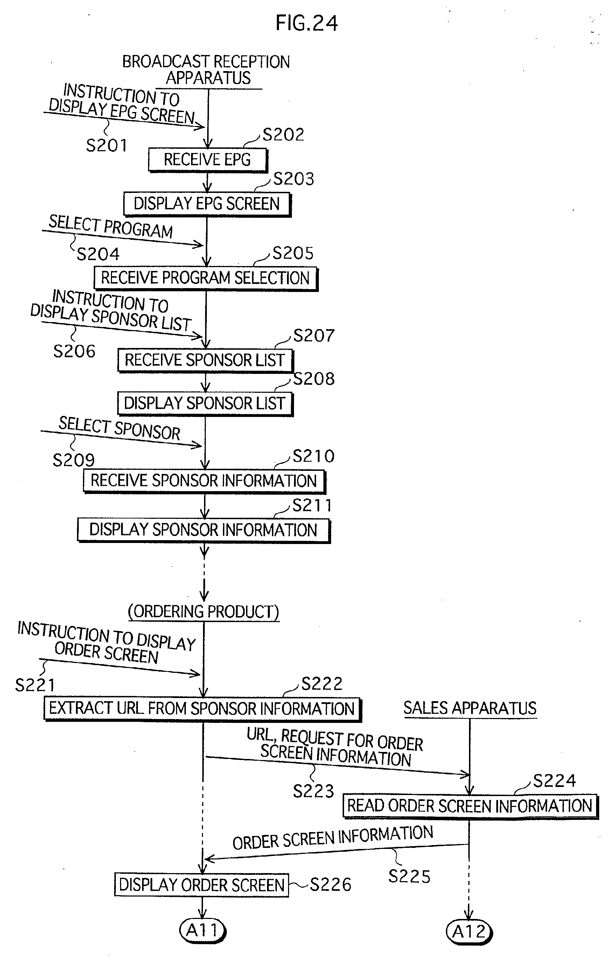

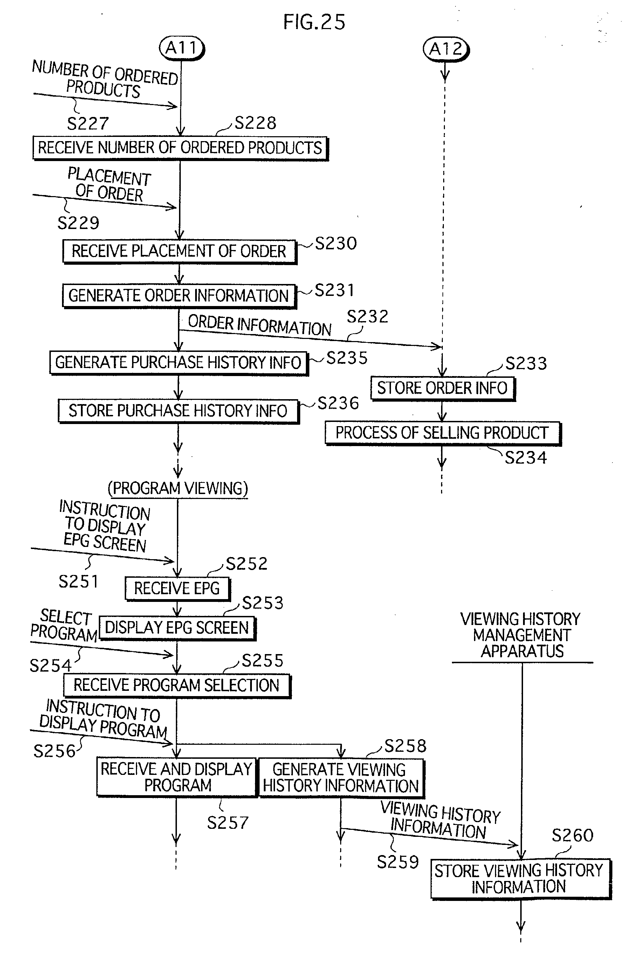

First, the operation of the broadcast reception apparatus 210b will be described with reference to the flowchart shown in Figs. 24-25.
It is presumed here that a viewer watches a program on the broadcast reception apparatus 210b broadcast by the broadcast station system 100b.
The control unit 217b receives an instruction to display the EPG screen from a viewer via the remote control 290b and the input/output unit 219b (step S201). The control unit 217b then controls the reception antenna 220b, tuner unit 211b, demodulation unit 212b, and separation unit 213b to receive an EPG being broadcast (step S202). The image decoder 215b decodes the image data of the EPG, and outputs the decoded image data to the monitor 230b via the combining unit 216b. As a result of this, the EPG screen D11 is displayed (step S203).
Next, the remote control 290b receives a specification of a program selected by the viewer on the EPG screen, and outputs the received specification of the selected program to the input/output unit 219b (step S204). The control unit 217b receives the specification of the selected program from the input/output unit 219b (step S205).
The control unit 217b then receives an instruction to display the sponsor list from a viewer via the remote control 290b and the input/output unit 219b (step S206). The control unit 217b then controls the reception antenna 220b, tuner unit 211b, demodulation unit 212b, and separation unit 213b to receive the sponsor list (step S207). The image decoder 215b decodes the image data of the sponsor list, and outputs the decoded image data to the monitor 230b via the combining unit 216b. As a result of this, the sponsor list screen D12 is displayed (step S208).
The control unit 217b then receives a specification of a selected sponsor from a viewer via the remote control 290b and the input/output unit 219b (step S209). The control unit 217b then controls the reception antenna 220b, tuner unit 211b, demodulation unit 212b, and separation unit 213b to receive the sponsor information corresponding to the specified sponsor (step S210). The image decoder 215b decodes the image data of the sponsor information, and outputs the decoded image data to the monitor 230b via the combining unit 216b. The audio decoder 214b decodes the audio data of the sponsor information, and outputs the decoded audio data to the speaker 280b. As a result of this, the sponsor information screen D13 is displayed (step S211).
With the above-described operation, the viewer can access the sponsor information concerning the products or services sold or provided by the sponsor.
Next, a case where the viewer orders a product or service by referring to the sponsor information will be described.
The control unit 217b receives an instruction to display an order screen on which the user can order a product or a service displayed on the sponsor information screen D13, from the viewer via the remote control 290b and the input/output unit 219b (step S221). The control unit 217b then extracts a URL from the sponsor information (step S222), and transmits the extracted URL and a request for order screen information to the sales apparatus 310b via the communication apparatus 240b and the Internet 2b (step S223).

The control unit 314b of the sales apparatus 310b at a location indicated by the URL receives the URL and the request for order screen information via the Internet 2b and the communication unit 316b (step S223). The control unit 314b the reads the order screen information 318b from the information storage unit 311b (step S224), and transmits the read order screen information to the viewer system 200b via the communication unit 316b and the Internet 2b (step S225).

The control unit 217b of the broadcast reception apparatus 210b receives the order screen information via the Internet 2b and the communication apparatus 240b (step S225), generates the order screen D14 based on the received order screen information, and outputs the generated order screen D14 to the monitor 230b via the combining unit 216b. With this operation, the order screen D14 is displayed (step S226).

The remote control 290b receives a specification of the number of products and a placement of order for a product or service that are displayed on the order screen D14, and outputs the received number of products to the input/output unit 219b (step S227). The control unit 217b receives the number of products via the input/output unit 219b (step S228). The remote control 290b further receives from the viewer a placement of order for a product or a service that are displayed on the order screen D14, and outputs the received placement of order to the input/output unit 219b (step S229). The control unit 217b receives the placement of order via the input/output unit 219b (step S230).

Next, the control unit 217b generates order information based on information displayed on the order screen D14 regarding the products or services and the specified number of products (step S231). The control unit 217b transmits the generated order information to the sales apparatus 310b via the communication apparatus 240b and the Internet 2b (step S232).

The control unit 314b of the sales apparatus 310b receives the order information via the Internet 2b and the communication unit 316b (step S232), and writes the received order screen information into the order information table 317b in the information storage unit 311b (step S233). The sales processing unit 315b then performs the process of selling the product or service using the order information table 317b (step S234).

The control unit 217b of the broadcast reception apparatus 210b generates purchase history information based on information displayed on the order screen D14 regarding the products or services and the received number of products (step S235). The control unit 217b then outputs the generated purchase history information to the control unit 253b of the product purchase history management apparatus 250b via the connection units 218b and 252b. The control unit 253b then writes the received purchase history information into the product purchase history management table 254b in the information storage unit 251b (step S236).

As described above, the viewer orders a product or service .

The viewer receives and views a program in the following manner.

The control unit 217b receives an instruction to display the EPG screen from a viewer via the remote control 290b and the input/output unit 219b (step S251). The control unit 217b then controls the reception antenna 220b, tuner unit 211b, demodulation unit 212b, and separation unit 213b to receive an EPG (step S252). The image decoder 215b decodes the image data of the EPG, and outputs the decoded image data to the monitor 230b via the combining unit 216b. As a result of this, the EPG screen D11 is displayed (step S253).

Next, the remote control 290b receives a specification of a program selected by the viewer on the EPG screen, and outputs the received specification of the selected program to the input/output unit 219b (step S254). The control unit 217b receives the specification of the selected program from the input/output unit 219b (step S255).

The control unit 217b then receives an instruction to display the program selected by the viewer via the remote control 290b and the input/output unit 219b (step S256), and controls the reception antenna 220b, tuner unit 211b, demodulation unit 212b, and separation unit 213b to receive the program. The image decoder 215b decodes the image data of the program, and outputs the decoded image data to the monitor 230b via the combining unit 216b. The audio decoder 214b decodes the audio data of the program, and outputs the decoded audio data to the speaker 280b. As a result of this, the program is displayed (step S257).

The control unit 217b generates viewing history information based on the instruction to display the program input by the viewer (step S258), and transmits the generated viewing history information to the viewing history management apparatus 130b of the broadcast station system 100b via the communication apparatus 240b and the Internet 2b (step S259).

The control unit 131b of the viewing history management apparatus 130b receives the viewing history information via the Internet 2b and the communication unit 132b (step S259), and writes the received viewing history information into the viewing history information table 137b in the information storage unit 134b (step S260).

## (2) Operation of Retail System 400b

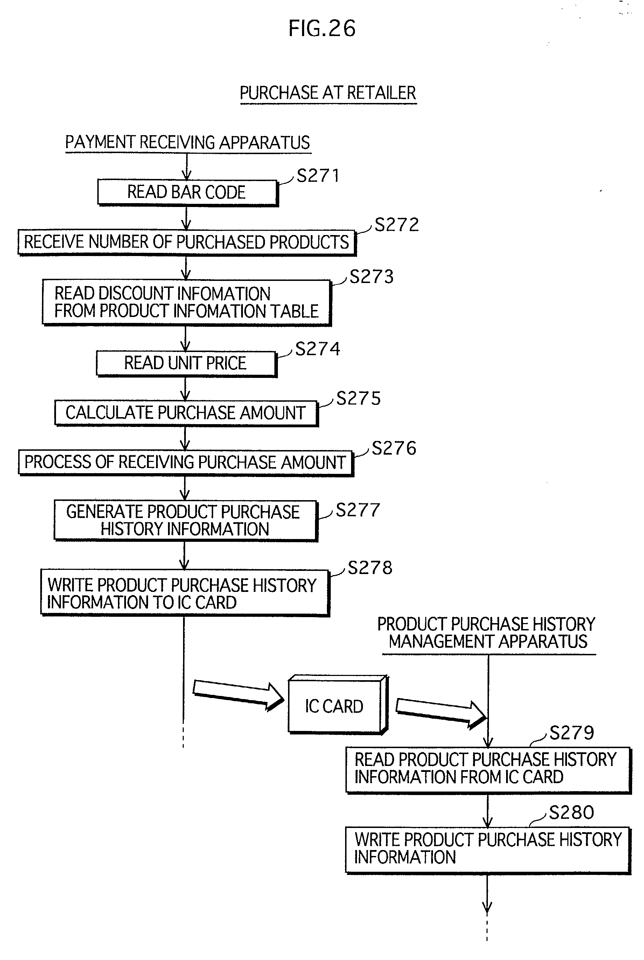

The operation of the retail system 400b will be described with reference to the flowchart shown in Fig. 26. It is supposed here that the viewer obtains information of products or services sold or provided by the sponsor in such a manner as described above, and buys a product or service at a retailer.

Suppose that the IC card 600b of the viewer is inserted into the IC card writer 430b connected to the payment receiving apparatus 410b.

The control unit 414b obtains, via the bar code reader 440b, either a product ID from a bar code attached to a product or a package of the product, or a product ID from a bar code attached to a material used for the service (step S271), receives information indicating the number of products or services from a retailer via the input unit 411b (step S272), reads a piece of discount information corresponding to the product ID obtained from the product information table 418b in the information storage unit 413b (step S273), reads a unit price (step S274), and calculates a purchase amount by multiplying the unit price by the number of products or services (step S275). The payment receiving unit 415b then performs a process of receiving the purchase amount (step S276).

The control unit 414b then generates product purchase history information based on the retailer name, product information, the number of purchased products or services, purchase amount, and purchase date/time (step S277), and outputs the generated product purchase history information to the IC card 600b via the IC card writer 430b. The input/output unit 32b of the IC card 600b receives the product purchase history information and writes the product purchase history information into the information storage unit 31b (step S278).

The viewer then receives the IC card 600b storing the product purchase history information from the retailer and brings it home. At home, the viewer inserts the IC card 600b into the IC card reader 270b that is connected to the product purchase history management apparatus 250b.

The control unit 253b of the product purchase history management apparatus 250b reads the product purchase history information from the IC card 600b via the IC card reader 270b and the connection unit 252b (step S279), and writes the product purchase history information into the product purchase history management table 254b in the information storage unit 251b (step S280).

As described above, if the viewer buys a product or receives a service at a retailer, the product purchase history information concerning the product or service is stored in the product purchase history management apparatus 250b in the viewer system 200b.

(3) Operation of Viewing History Management Apparatus 130b, Viewing Fee Calculation Apparatus 150b, Product Purchase History Management Apparatus 170b, Product Purchase History Management Apparatus 250b, Sales Apparatus 310b

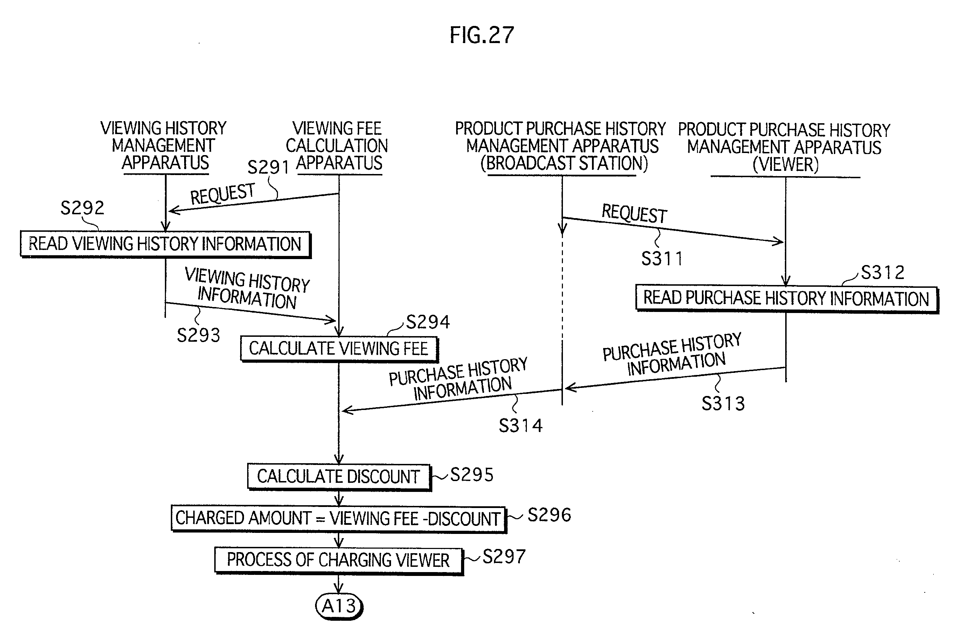

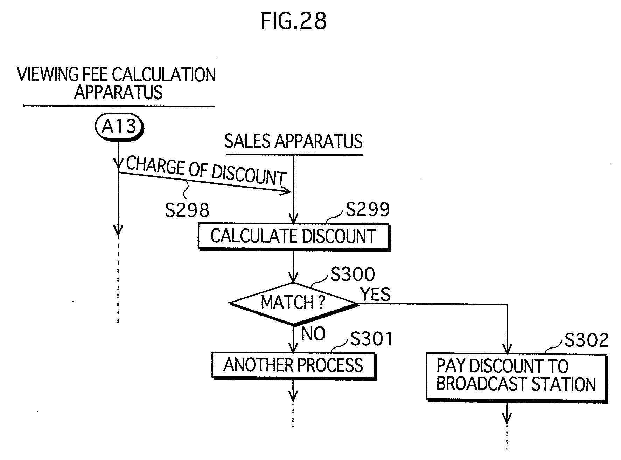

The operation of the viewing history management apparatus 130b, viewing fee calculation apparatus 150b, product purchase history management apparatus 170b, product purchase history management apparatus 250b, and sales apparatus 310b will be described with reference to the flowchart shown in Figs. 27 and 28.

The control unit 151b of the viewing fee calculation apparatus 150b outputs a request to read the viewing history information, to the viewing history management apparatus 130b. The control unit 131b of the viewing history management apparatus 130b receives the request to read the viewing history information via the input/output unit 133b (step S291). The control unit 131b then reads the viewing history information from the viewing history information table 137b in the information storage unit 134b (step S292), and outputs the read viewing history information to the viewing fee calculation apparatus 150b via the input/output unit 133b. The control unit 151b of the viewing fee calculation apparatus 150b receives the viewing history information via the input/output unit 153b (step S293). The control unit 151b then calculates a viewing fee using the received viewing history information (step S294).

On the other hand, the product purchase history management apparatus 170b transmits the request to read the viewing history information to the product purchase history management apparatus 250b via the communication unit 172b and the Internet 2b. The control unit 253b of the product purchase history management apparatus 250b receives the request to read the viewing history information via the Internet 2b and the communication unit 172b (step S311). The control unit 253b the reads the purchase history information from the product purchase history management table 254b in the information storage unit 251b (step S312), and transmits the read purchase history information to the product purchase history management apparatus 170b via the communication unit 240b and the Internet 2b. The control unit 171b of the product purchase history management apparatus 170b receives the purchase history information via the Internet 2b and the communication unit 240b (step S313), and transmits the received purchase history information to the viewing fee calculation apparatus 150b via the input/output unit 176b (step S314).

The control unit 151b of the viewing fee calculation apparatus 150b then calculates a discount (step S295), calculates a charged amount (= viewing fee - discount) (step S296), and performs a process of charging the viewer the calculated amount (step S297).

The control unit 151b of the viewing fee calculation apparatus 150b transmits a charge of the calculated discount to the sales apparatus 310b via the communication unit 154b and the Internet 2b (step S298).

The control unit 314b of the sales apparatus 310b receives information indicating the discount via the Internet 2b and the communication unit 316b (step S298), calculates a discount (step S299), and judges whether the calculated discount matches the received discount (step S300). If they match, the control unit 314b performs a process of paying the discount to the broadcaster (step S302).

If it is judged that the discounts do not match in step S300, the control unit 314b performs another process, such as displaying a message indicating the fact.

## 2.13 Conclusion

Now, the system of Embodiment 2 will be summarized using an example. The broadcaster produces a program B at a total cost of 20 million yen including a production cost, a distribution cost, and a profit of the broadcaster. A sponsor S of the program B pays 10 million yen to the broadcaster as part of the production cost. The broadcaster produces and broadcasts the program B using the program distribution apparatus 110b in a prospect of collecting the remaining 10 million yen of the production cost from the viewers as the viewing fee.

The viewers each use the broadcast reception apparatus 210b to watch the broadcast program B. When viewing the program B, a viewer uses a remote control to control the broadcast reception apparatus 210b. The viewer causes the broadcast reception apparatus 210b to display the EPG screen D11 and selects the program B on the EPG screen D11. The viewer then causes the broadcast reception apparatus 210b to display the sponsor list screen D12 to check the sponsors of the program B, and selects the sponsor S on the sponsor list screen D12. The viewer further causes the broadcast reception apparatus 210b to display the sponsor information screen D13 corresponding to the selected sponsor S . The viewer views information provided by the sponsor S on the sponsor information screen D13, such as a list of products that, when bought, discount the viewing fee, and their commercials. The sponsor information screen D13 also shows information concerning the products, expiration date for buying the products, and information concerning viewing fees shared by the sponsor when the products are bought.

Suppose here that recognizing on the screen that the viewer is discounted 200 yen of the viewing fee of the program B if he/she buys 5,000 yen of beer that is a product of the sponsor S, the viewer decides to buy 10,000 yen of beer.

To buy 10,000 yen of beer, the viewer selects the order screen button on the sponsor information screen D13. When the order screen button is selected, the broadcast reception apparatus 210b is connected to the sales apparatus 310b of the sponsor S via the communication apparatus 240b and the Internet 2b. This is followed by a display of the order screen D14 at the beer purchase site of the sponsor S. The viewer buys 10,000 yen of beer on the order screen D14. The information of the purchase, such as the purchased product, purchase amount, and purchase date/time, is then recorded onto the product purchase history management apparatus 250b of the viewer.

Note that if it is difficult to record the product purchase information onto the viewer system for some reason, the sales apparatus 310b of the sponsor S may transmit the product purchase information to the product purchase history management apparatus 170b of the broadcast station system 100b, and the product purchase history management apparatus 170b may store the received product purchase information.

The program viewing history indicating that the viewer viewed the program B is sent to the viewing history management apparatus 130b of the broadcast station system 100b using the communication apparatus 240b.

When calculating the program viewing fee to be charged to the viewer, the broadcast station system 100b obtains the purchase history information from the product purchase history management apparatus 250b of the viewer, using the communication apparatus 240b. Then the viewing fee calculation apparatus 150b calculates the viewing fee of the viewer based on the viewing history information stored in the viewing history management apparatus 130b, the viewing history information indicating that the viewer viewed the program B sponsored by the sponsor S. In this example, the viewing fee calculation apparatus 150b determines the viewing fee to be 1,000 yen.

The viewing fee calculation apparatus 150b also refers to the product purchase history of the viewer that is stored in the product purchase history management apparatus 170b. In this example, the product purchase history management apparatus 170b stores the purchase history information that indicates that the viewer bought 10,000 yen of beer, which is a product of the sponsor S, before the program B started. The viewing fee calculation apparatus 150b re-calculates the viewing fee based on the purchase history information. As a result of this calculation, the viewing fee is reduced. In this example, the viewing fee is discounted by 400 yen.

Subsequently, the broadcast station system 100b charges the viewer 600 yen for the viewing of the program B.

The viewer pays 600 yen to the broadcaster, and this completes the payment to the broadcaster for the viewing of the program B.

The sponsor S pays 400 yen as a discount of the viewing fee to the broadcaster. This is a giving back to the viewer who bought 10,000 of beer being a product of the sponsor S, and at the same time, this indicates that the sponsor S shares the viewing fee that should be paid by the viewer to the broadcaster.

In this way, the broadcaster can collect 1,000 yen from each viewer as the viewing fee, as has been planned, and use the viewing fee as the cost of producing and broadcasting the program.

It should be noted here that the viewer system may not have the product purchase history management apparatus. In such a case, the sales apparatus 310b of the sponsor S transmits the product purchase information to the product purchase history management apparatus 170b of the broadcast station system 100b, and the product purchase history management apparatus 170b stores the received product purchase information.

In the above description, the present invention is applied to a broadcast system that provides viewers with programs using broadcast waves. However, not limited to this, the present invention can be applied to such a system as distributes data (for example, music) to users via the Internet. In this system, the use fee can be collected by the above-described method.

As described in Embodiment 2, the viewer is required to check the sponsor of the program B to view the program B with a discounted viewing fee. The viewer selects a sponsor-dedicated channel using a remote controller or the like to cause the broadcast reception apparatus 210b to display information provided by the sponsor. The sponsor-dedicated channel provides various types of information such as information concerning products, product purchase expiration date, and a discount of viewing fee paid by the sponsor in exchange for purchase of a product.

After viewing the program B, the viewer sees the information provided on the sponsor-dedicated channel and recognizes that the viewer is discounted 200 yen of the viewing fee of the program B if he/she buys 5,000 yen of beer that is a product of the sponsor S. The viewer then buys 10,000 yen of beer at a retailer. When paying the price, the viewer also hands the IC card 600b to the retailer. The retailer inputs the received amount into the payment receiving apparatus 410b, and inserts the IC card 600b into the IC card writer 430b. The IC card writer 430b, which is connected to the payment receiving apparatus 410b, records onto the payment receiving apparatus 410b the data containing the purchase date and indicating that the viewer bought 10,000 yen of beer, a product of the sponsor S. It should be noted here that a credit card may be used as a medium to pay the price or record the purchase history.

The viewer brings the IC card 600b home, and inserts the IC card 600b into the IC card reader 270b that is connected to the product purchase history management apparatus 250b.

After the IC card 600b is inserted into the IC card reader 270b, the product purchase history information recorded on the IC card 600b is read by the IC card reader 270b, and recorded into the product purchase history management apparatus 250b.

When the communication apparatus 240b of the viewer receives a request for the product purchase history information from the broadcast station system 100b, the product purchase history management apparatus 250b transmits the product purchase history information to the product purchase history management apparatus 170b of the broadcast station system 100b.

The broadcast station system 100b calculates the viewing fee of the viewer based on the received product purchase history information in a same manner as described above, and charges the viewer and the sponsor S the viewing fee.

It should be noted here that also in a data (for example, music) distribution system, the use fee can be collected by a similar method.

Also, when a recording medium other than the IC card, such as an SD card or a portable terminal is used, the use fee can be collected by a similar method.

### 3. Embodiment 3

The following describes a contents distribution system 1c as another embodiment of the present invention.

### 3.1 Overview of Contents Distribution System 1c

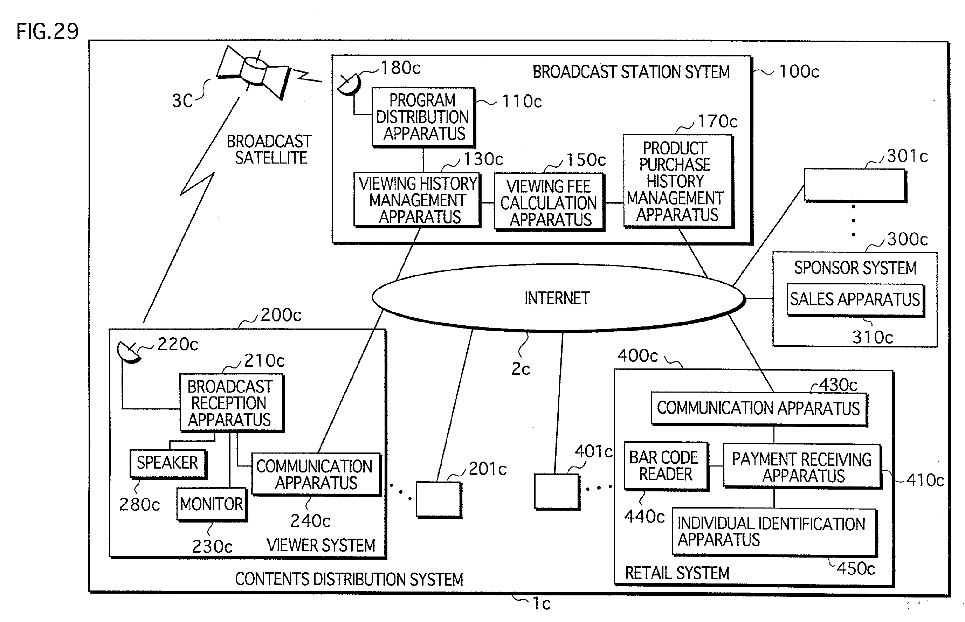

The contents distribution system 1c includes, as shown in Fig. 29, a broadcast station system 100c, a plurality of viewer systems 200c, ..., 201c, a plurality of sponsor systems 300c, ..., 301c, and a plurality of retail systems 400c, ..., 401c. Each of these systems is connected to the Internet 2c.

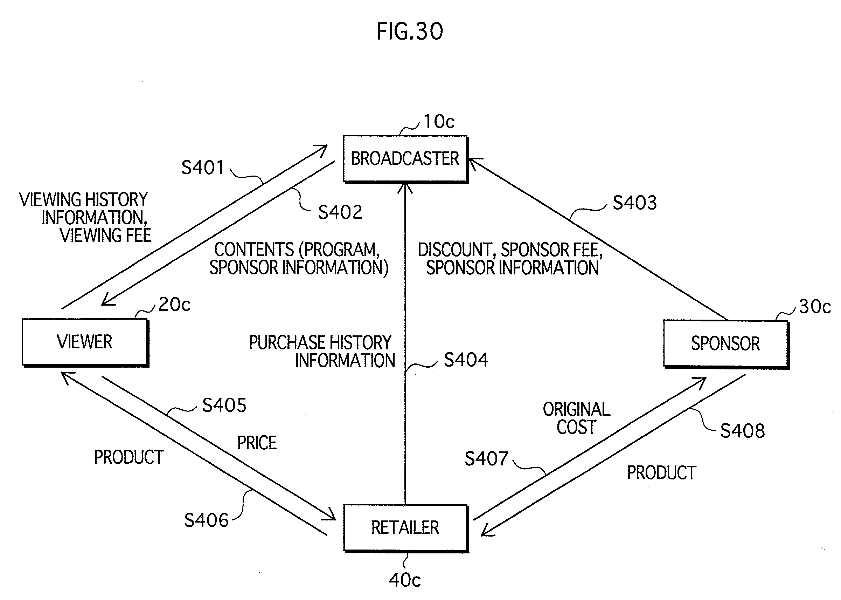

As shown in Fig. 30, a sponsor 30c, who sells various products or provides various services, pays a sponsor fee to a broadcaster 10c, the sponsor fee being used as part of the program production cost (step S403).

The broadcaster 10c, who manages a pay digital broadcast, owns the broadcast station system 100c. The broadcaster 10c produces a program. The broadcast station system 100c provides the program (that is, a content) to viewers by broadcasting the program via a broadcast satellite 3c on a chargeable basis (step S402).

The sponsor 30c owns the sponsor system 300c. The sponsor 30c generates sponsor information that introduces such various products and services that the sponsor sells or provides. The sponsor system 300c outputs the sponsor information to the broadcast station system 100c via the Internet 2c (step S403).

The broadcast station system 100c receives the sponsor information from the sponsor system 300c (step S403), and provides the sponsor information (that is, a content) to a viewer 20c by broadcasting it together with the program, via the broadcast satellite 3c (step S402).

The sponsor 30c provides a retailer 40c with products (step S408). The retailer 40c pays the original cost to the sponsor 30c (step S407).

The viewer 20c has the viewer system 200c. The viewer system 200c receives (step S402) and reproduces the broadcast programs and sponsor information. The viewer 20c transmits viewing history information to the broadcaster 10c (step S401).

The viewer 20c recognizes the products or services the sponsor sells or provides, watching the broadcast sponsor information, and buys a product or receives a service at the retailer (step S406). In doing so, the viewer 20c pays the price to the retailer (step S405). The retail system 400c transmits the purchase history information to the broadcast station system 100c via the Internet 2c, the purchase history information showing the history of the viewer 20c of buying products or receiving services (step S404).

The broadcast station system 100c of the broadcaster 10c receives the purchase history information from the retail system 400c (step S404). The broadcaster 10c then calculates a provisional fee to be charged to the viewer 20c for viewing programs based on the viewing history information, calculates a discount based on the purchase history information, and charges the viewer 20c a viewing fee obtained by subtracting the discount from the provisional fee. The viewer 20c pays the viewing fee to the broadcaster 10c (step S401).

The broadcaster 10c charges the sponsor 30c the discount of the viewing fee. The sponsor 30c pays the discount to the broadcaster 10c (step S403).

The broadcaster 10c appropriates the viewing fee received from the viewer 20c and the sponsor fee and the discount of the viewing fee received from the sponsor 30c to the program production cost.

As shown in Fig. 29, the broadcast station system 100c includes a program distribution apparatus 110c, a viewing history management apparatus 130c, a viewing fee calculation apparatus 150c, a product purchase history management apparatus 170c, and a transmission antenna 180c. The viewer system 200c includes a broadcast reception apparatus 210c, a monitor 230c, a speaker 280c, a reception antenna 220c, and a communication apparatus 240c. This also applies to the other viewer systems. The sponsor system 300c includes a sales apparatus 310c. This also applies to the other sponsor systems. The retail system 400c includes a payment receiving apparatus 410c, a communication apparatus 430c, a bar code reader 440c, and an individual identification apparatus 450c. This also applies to the other retail systems.

The program distribution apparatus 110c, viewing history management apparatus 130c, viewing fee calculation apparatus 150c, product purchase history management apparatus 170c, and transmission antenna 180c have the same construction as the program distribution apparatus 110b, viewing history management apparatus 130b, viewing fee calculation apparatus 150b, product purchase history management apparatus 170b, and transmission antenna 180b, respectively.

Also, the broadcast reception apparatus 210c, monitor 230c, speaker 280c, reception antenna 220c, and communication apparatus 240c have the same construction as the broadcast reception apparatus 210b, monitor 230b, speaker 280b, reception antenna 220b, and communication apparatus 240b, respectively.

Also, the sales apparatus 310c has the same construction as the sales apparatus 310b.

Also, the payment receiving apparatus 410c and bar code reader 440c have the same construction as the payment receiving apparatus 410b and bar code reader 440b, respectively.

Here, the differences from the previous embodiments will be explained mainly.

Now, each apparatus will be described in detail.

### 3.2 Program Distribution Apparatus 110c

The program distribution apparatus 110c has the same construction as the program distribution apparatus 110b. Accordingly, the differences from the program distribution apparatus 110b will be explained mainly.

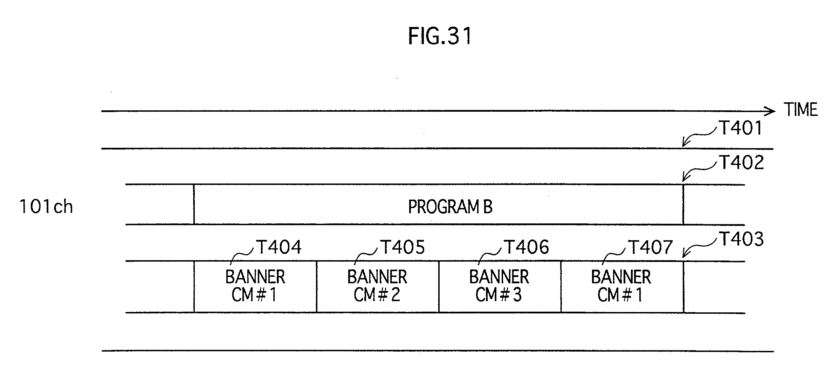

As shown in Fig. 31, the program distribution apparatus 110c broadcasts a program stream T402 and a banner CM stream T403 on a channel T401 "101ch".

In this example, the program stream T102 includes a program B.

Also, the banner CM stream T403 includes banner CMs T404 to T407. Each banner CM is a commercial that is displayed together with a program.

### 3.3 Broadcast Reception Apparatus 210c

The broadcast reception apparatus 210c has the same construction as the broadcast reception apparatus 210b. Here, the differences from the broadcast reception apparatus 210b will be explained mainly.

#### (1) Remote Control 290b and Input/Output Unit 219b

The remote control 290b further receives various instructions or specifications from a user that are made by selecting corresponding buttons, and outputs the received instructions or specifications to the input/output unit 219b. The input/output unit 219b receives the user instructions or specifications and outputs the received instructions or specifications to the control unit 217b.

Such buttons include "charged" and "accept". The "charged" button is displayed on the screen while a program is displayed together with a banner CM. If the user selects the "charged" button and then the "accept" button in sequence, the user is charged for the subsequent viewing of the program. After the selection of the two buttons, the user can watch the program without the banner CM.

The "accept" button is displayed only after the user selects the "charged" button. A "cancel" button is also displayed together with the "accept" button so that the user can cancel the charged viewing if, for example, the user has selected the "charged" button by mistake. If the user selects the "accept" button, it is regarded that the user has accepted the charged viewing intentionally.

#### (2) Control Unit 217b

The control unit 217b further receives the various instructions or specifications from the user that are made by selecting the "charged" or "accept" button or the like, via the remote control 290b and input/output unit 219b.

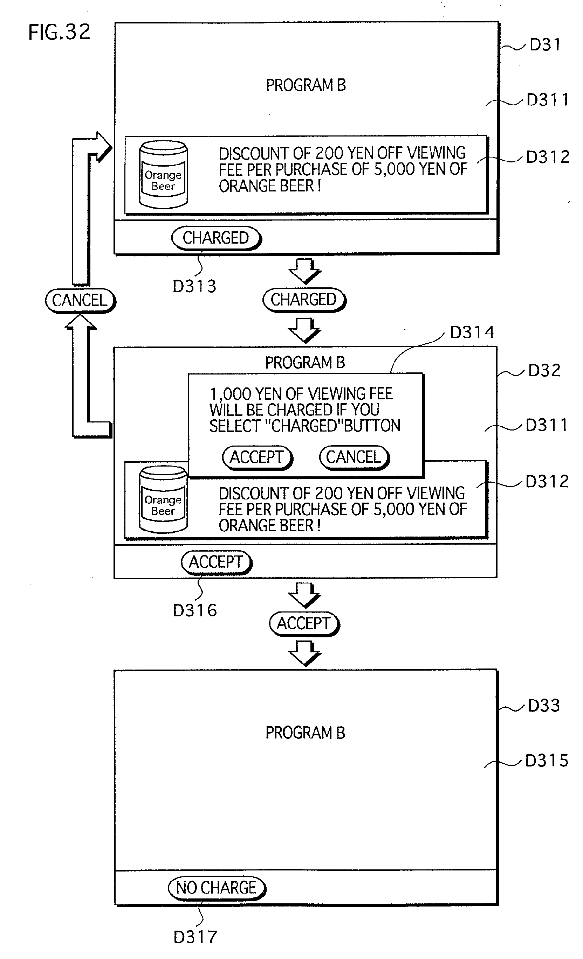

Upon receiving a specification of a program and then an instruction to display the specified program, the control unit 217b controls the reception antenna 220b, tuner unit 211b, demodulation unit 212b, and separation unit 213b to receive the program and a banner CM. Fig. 32 shows a screen D31 that is an example of the screen containing the program and the banner CM displayed by the operation. The screen D31 includes (i) a portion D311 in which the program is displayed and (ii) a portion D312 in which the banner CM is displayed. The screen D31 also displays a "charged" button D313.

Upon receiving a selection of the "charged" button, the control unit 217b exercises a control so that a screen D32, in which a message field D314 is superimposed on the screen D31, is displayed, as shown in Fig. 32. The message field D314 includes a message "1,000 yen of viewing fee will be charged if you select "charged" button", and also includes an "accept" button and a "cancel" button.

If the user selects the "accept" button, the control unit 217b exercises a control so that a screen D33 is displayed, as shown in Fig. 32. The screen D33 does not display any banner CM.

If the user selects the "cancel" button on the screen D32, the control unit 217b exercises a control so that the screen returns to the screen D31 in which the banner CM is displayed, as shown in Fig. 32.

If the user selects the "charged" button and the "accept" button in sequence, the control unit 217b totals up the viewing time of the program by the user to obtain a total viewing time. Upon receiving an instruction to end the charged viewing of the program, the control unit 217b transmits viewing information, which includes the total viewing time, to the broadcast station system 100c via the communication apparatus 240c.

### 3.4 Viewing Fee Calculation Apparatus 150c

The viewing fee calculation apparatus 150c has the same construction as the viewing fee calculation apparatus 150b. Here, the differences from the viewing fee calculation apparatus 150b will be explained mainly.

The viewing fee calculation apparatus 150c calculates the viewing fee to be charged to the viewer, based on the viewing information containing the total viewing time that is received from the broadcast reception apparatus 210c.

### 3.5 Product Purchase History Management Apparatus 170c

The product purchase history management apparatus 170c has the same construction as the product purchase history management apparatus 170b. Here, the differences from the product purchase history management apparatus 170b will be explained mainly.

The product purchase history management apparatus 170c receives the product purchase history information from the payment receiving apparatus 410c of the retail system 400c via the Internet 2c, and stores the received product purchase history information.

### 3.6 Payment Receiving Apparatus 410c

The payment receiving apparatus 410c has the same construction as the payment receiving apparatus 410b. Here, the differences from the payment receiving apparatus 410b will be explained mainly.

When the viewer buys a product at a retailer, a bar code reader 440c connected to the payment receiving apparatus 410c reads a product ID from a bar code attached to the product. The payment receiving apparatus 410c also receives input by an operator of the number of products the viewer bought.

The payment receiving apparatus 410c then receives a client ID number for identifying a viewer uniquely. The client ID number is input by the operator . It should be noted here that the client ID number may be read from a credit card or an IC card in which the client ID number has been recorded beforehand.

The payment receiving apparatus 410c then reads the discount information and the unit price corresponding to the product ID from the product information table, calculates the purchase amount, and performs the process of receiving the payment.

The payment receiving apparatus 410c also generates product purchase history information, and transmits the generated product purchase history information to the product purchase history management apparatus 170c of the broadcast station system 100c via the communication apparatus 430c and the Internet 2c.

### 3.7 Operation of Contents Distribution System 1c

Now, the operation of the contents distribution system 1c will be described.

#### (1) Operation of Broadcast Reception Apparatus 210c

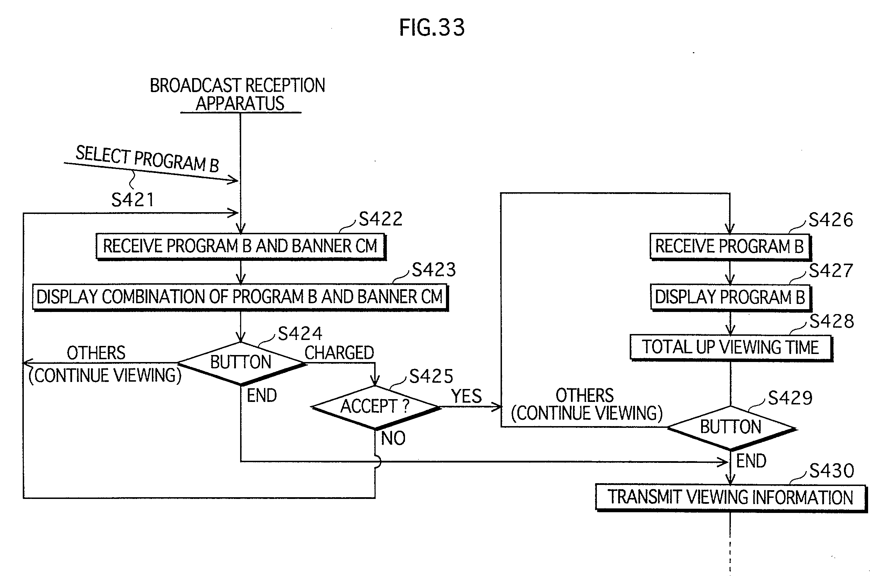

The operation of the broadcast reception apparatus 210c will be described with reference to the flowchart shown in Fig. 33.

Upon receiving a specification of a program and then an instruction to display the specified program (step S421), the control unit 217b controls the reception antenna 220b, tuner unit 211b, demodulation unit 212b, and separation unit 213b to receive the program and a banner CM (step S422). The control unit 217b then controls the combining unit 216b to combine the program with the banner CM. It is presumed here that as a result of this operation, the screen D31 shown in Fig. 32 that contains the program and the banner CM is displayed (step S423).

Upon receiving a selection of the "charged" button (step S424), and then a selection of the "accept" button (step S425), the control unit 217b controls the reception antenna 220b, tuner unit 211b, demodulation unit 212b, and separation unit 213b to receive only the program (step S426), and controls the combining unit 216b to display only the received program. It is presumed here that as a result of this operation, the screen D33 shown in Fig. 32 that contains only the program is displayed (step S427). The control unit 217b then totals up the viewing time of the program by the user to obtain a total viewing time (step S428).

The control unit 217b then returns to the step S406 and repeats the steps until it receives an instruction to end the charged viewing of the program (step S429).

Upon receiving the instruction to end the charged viewing of the program (step S429), the control unit 217b transmits viewing information, which includes the total viewing time, to the broadcast station system 100c via the communication apparatus 240c (step S430).

(2) Operation of Payment Receiving Apparatus 410c and Product Purchase History Management Apparatus 170c

The operation of the payment receiving apparatus 410c and the product purchase history management apparatus 170c will be described with reference to the flowchart shown in Fig. 33. When the viewer buys a product at a retailer, the bar code reader 440b connected to the payment receiving apparatus 410c reads a product ID from a bar code attached to the product (step S451). The payment receiving apparatus 410c then receives input by an operator of the number of products the viewer bought (step S452). The payment receiving apparatus 410c then obtains a client ID number for identifying a viewer uniquely (step S453). The payment receiving apparatus 410c then reads the discount information corresponding to the product ID from the product information table (step S454), reads the unit price (step S455), calculates the purchase amount (step S456), and performs the process of receiving the payment (step S457).

The payment receiving apparatus 410c then generates the product purchase history information (step S458), and transmits the generated product purchase history information to the product purchase history management apparatus 170c of the broadcast station system 100c via the communication apparatus 430c and the Internet 2c (step S459).

The product purchase history management apparatus 170c receives the product purchase history information from the payment receiving apparatus 410c of the retail system 400c via the Internet 2c (step S459), and stores the received product purchase history information (step S460).

3.8 Conclusion

As described above, the pay broadcast of Embodiment 3 differs from that of Embodiment 2 in the contents transmitted from the broadcast station, and in the route to the broadcast station system on which the purchase history information of the product the viewer bought is transferred.

Suppose here that a viewer is viewing the program B broadcast by the program distribution apparatus 110c of the broadcast station system 100c. The program B is being broadcast together with a banner CM which contains a commercial of a company sponsoring the program B, information on the products that, when bought, discount the viewing fee, and the discount rate. The viewer views the banner CM, as well as the program.

If the viewer is not annoyed by the banner CM displayed together with the program, the viewer can continue to view the program B without incurring any charge.

On the other hand, if the viewer does not want to view the banner CM together with the program B, the viewer can delete the banner CM by selecting the "charged" button on the screen of the broadcast reception apparatus 210c. After selecting the "charged" button, the viewer is notified that the viewer will be charged 1,000 yen for the viewing. After the viewer confirms that the viewer is charged for viewing the program and accepts the charged viewing, the communication apparatus 240c transmits the viewing information to the viewing history management apparatus 190c.

Suppose here that recognizing by viewing the banner CM or the like that the viewer is discounted 200 yen of the viewing fee of the program B if he/she buys 5,000 yen of beer that is a product of the sponsor S, the viewer decides to buy 10,000 yen of beer. The viewer goes to a retailer and buys 10,000 yen of beer there. When the viewer pays the price to the retailer, an operator, namely a salesclerk of the retailer inputs information such as the name of the product the viewer bought and the purchase amount into the payment receiving apparatus 410c. The operator also inputs the client ID number, which has been assigned to the viewer by the broadcaster beforehand, into the payment receiving apparatus 410c. This enables the payment receiving apparatus 410c to identify the person who bought the product as the viewer.

In inputting the client ID number, a medium such as an IC card or a credit card in which information for identifying an individual is recorded may be used, not by typing of the operator. Also, an apparatus such as a portable terminal or a mobile phone in which information for identifying an individual is recorded may be used. Also, the client ID number may be detected from a personal verification using physical characteristics such as a fingerprint comparison. Furthermore, the client ID number may not be input directly into the individual identification apparatus 450c, but may be input into the payment receiving apparatus 410c first and then transferred to the individual identification apparatus 450c.

To prevent the salesclerk from inputting a wrong client ID number, the password or fingerprint may be verified, or verification of the client ID number may be requested to a certain facility for identifying the clients.

After the salesclerk inputs the product purchase history information into the payment receiving apparatus 410c, the payment receiving apparatus 410c transmits the data, which includes the client ID number and the purchase date and indicates that the viewer bought 10,000 yen of beer of the sponsor S, to the product purchase history management apparatus 170c of the broadcast station system 100c via the communication apparatus 430c and the Internet 2c.

The viewing fee calculation apparatus 150b calculates the viewing fee of the viewer based on (i) the viewing history information stored in the viewing history management apparatus 130b and (ii) the purchase history information stored in the product purchase history management apparatus 170b, in the same manner as described in Embodiment 2, and charges the viewer the calculated viewing fee, charging the sponsor S the discount.

It should be noted here that also in a data (for example, music) distribution system, the use fee can be collected by a similar method.

## 4. Embodiment 4

The following describes a contents distribution system 1d as another embodiment of the present invention.

### 4.1 Overview of Contents Distribution System 1d

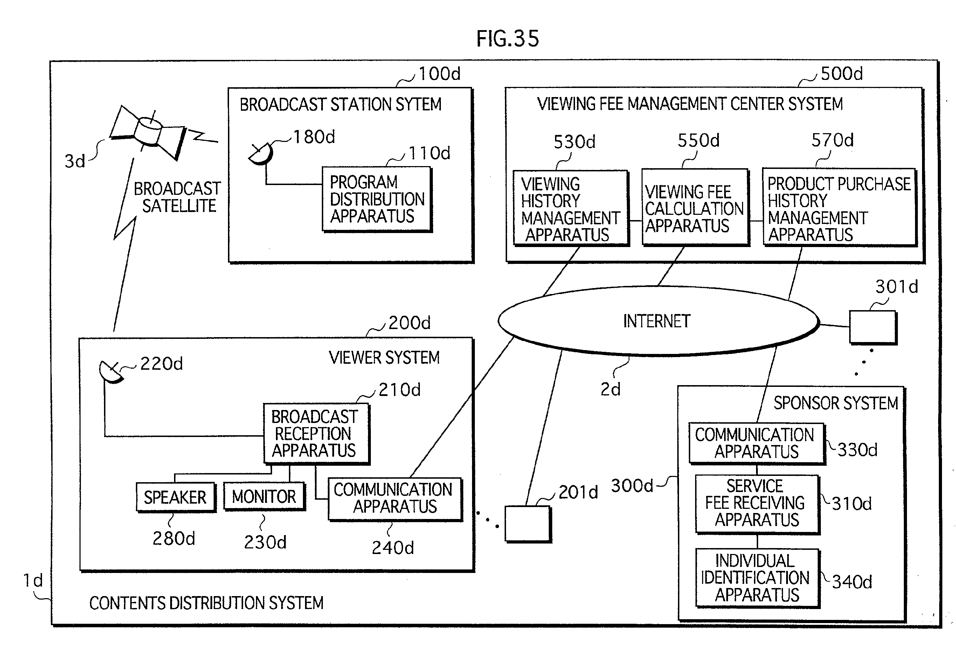

The contents distribution system 1d includes, as shown in Fig. 35, a broadcast station system 100d, a viewing fee management center system 500d, a plurality of viewer systems 200d, ..., 201d, and a plurality of sponsor systems 300d, ..., 301d.

Of these, the viewing fee management center system 500d, viewer systems 200d, ..., 201d, and sponsor systems 300d, ..., 301d are connected to the Internet 2d.

As shown in Figs . 36 and 37, a sponsor 30d, who sells various products or provides various services, pays a sponsor fee to a broadcaster 10d, the sponsor fee being used as part of the program production cost (step S502).

The broadcaster 10d, who manages a pay digital broadcast, owns the broadcast station system 100d. The broadcaster 10d produces a program. The broadcast station system 100d provides the program (that is, a content) to viewers by broadcasting the program via a broadcast satellite 3d on a chargeable basis (step S504).

The sponsor 30d owns the sponsor system 300d. The sponsor 30d generates sponsor information that introduces such various products and services that the sponsor sells or provides. The sponsor system 300d provides the broadcaster 10d with the sponsor information (step S502).

The broadcast station system 100d provides the sponsor information (that is, a content) to a viewer 20d by broadcasting it together with the program, via the broadcast satellite 3d (step S504).

The viewer 20d has the viewer system 200d. The viewer system 200d receives (step S504) and reproduces the broadcast programs and sponsor information. The viewer 20d transmits viewing history information to the viewing fee management center system 500d of a viewing fee management center 50d (step S503).

The viewer 20d recognizes the products or services the sponsor sells or provides, watching the broadcast sponsor information, and buys a product or receives a service from the sponsor (step S506). In doing so, the viewer 20d pays the price to the sponsor 30d (step S505). The sponsor 30d transmits the purchase history information to the viewing fee management center 50d, the purchase history information showing the history of the viewer 20d of buying products or receiving services (step S507).

The viewing fee management center 50d calculates a discount of the viewing fee based on the purchase history information, and charges the viewer 20d an amount (viewing fee) that is a result of subtracting the discount from the normal viewing fee, and charges the sponsor 30d the discount. The sponsor 30d pays the discount of the viewing fee to the viewing fee management center 50d (step S507). This indicates that the sponsor 30d shares the viewing fee that should be paid by the viewer to the broadcaster.

The viewing fee management center 50d analyzes the viewing history information received from the viewer 20d to extract taste information of the viewer 20d, and sends the extracted taste information to the sponsor 30d (step S508). The sponsor 30d pays a taste information use fee to the viewing fee management center 50d as compensation for the received taste information (step S507).

The viewing fee management center 50d calculates a viewing fee for the viewer 20d based on the viewing history information, subtracts the discount and the taste information use fee from the viewing fee, and charges the viewer an amount that is the result of the calculation. The viewer pays the charged amount to the viewing fee management center 50d (step S503).

The viewing fee management center 50d pays the discount and the taste information use fee to the broadcaster 10d. The broadcaster 10d receives the discount and the taste information use fee (step s501).

The broadcaster 10d appropriates (i) the sponsor fee received from the sponsor 30d, (ii) the discount of the viewing fee received from the sponsor 30d, (iii) the taste information use fee received from the sponsor 30d, and (iv) the viewing fee (an amount after the discount and the taste information use fee are subtracted from a normal viewing fee) received from the viewer 20d to the program production cost.

As shown in Fig. 35, the broadcast station system 100d includes a program distribution apparatus 110d and a transmission antenna 180d. The viewing fee management center system 500d includes a viewing history management apparatus 530d, a viewing fee calculation apparatus 550d, and a product purchase history management apparatus 570d. The viewer system 200d includes a broadcast reception apparatus 210d, a monitor 230d, a speaker 280d, a reception antenna 220d, and a communication apparatus 240d. This also applies to the other viewer systems. The sponsor system 300d includes a service fee receiving apparatus 310d, a communication apparatus 330d, and an individual identification apparatus 340d. This also applies to the other sponsor systems.

The program distribution apparatus 110d and the transmission antenna 180d have the same construction as the program distribution apparatus 110b and the transmission antenna 180b, respectively. The viewing history management apparatus 530d, the viewing fee calculation apparatus 550d, and the product purchase history management apparatus 570d have the same construction as the viewing history management apparatus 130b, the viewing fee calculation apparatus 150b, and the product purchase history management apparatus 170b. The broadcast reception apparatus 210d, the monitor 230d, the speaker 280d, the reception antenna 220d, and the communication apparatus 240d have the same construction as the broadcast reception apparatus 210b, the monitor 230b, the speaker 280b, the reception antenna 220b, and the communication apparatus 240b.

Here, the differences from the previous embodiments will be explained mainly.

Now, each apparatus will be described in detail.

### 4.2 Program Distribution Apparatus 110d

The program distribution apparatus 110d has the same construction as the program distribution apparatus 110b. Accordingly, the differences from the program distribution apparatus 110b will be explained mainly.

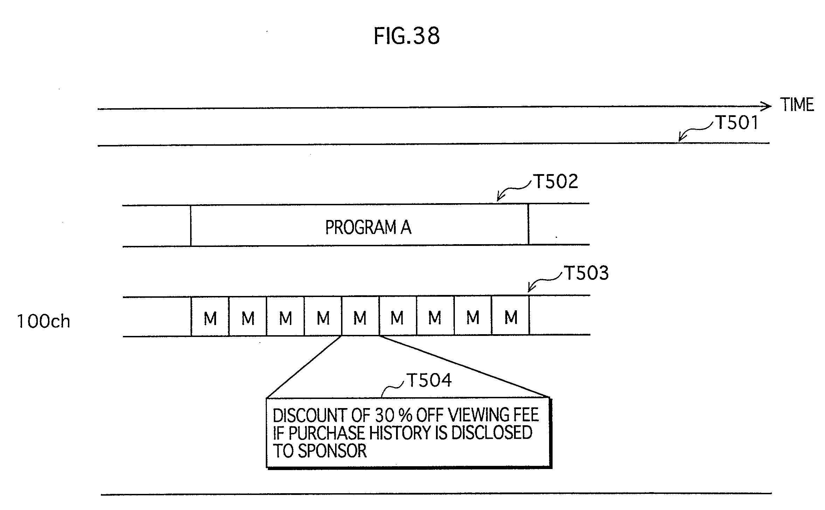

As shown in Fig. 38, the program distribution apparatus 110d broadcasts a program stream T502 and a message stream T503 on a channel T501 "100ch".

In this example, the program stream T502 includes a program A.

Also, the message stream T503 includes a plurality of messages (represented as "M" in Fig. 38). In this example, each of the plurality of messages is related to the discount of the viewing fee for the program B, such as the one shown in Fig. 38, "discount of 30% off viewing fee if purchase history is disclosed to sponsor".

### 4.3 Broadcast Reception Apparatus 210d

The broadcast reception apparatus 210d has the same construction as the broadcast reception apparatus 210b. Accordingly, the differences from the broadcast reception apparatus 210b will be explained mainly.

#### (1) Remote Control 290b and Input/Output Unit 219b

The remote control 290b further receives various instructions or specifications from a user that are made by selecting corresponding buttons, and outputs the received instructions or specifications to the input/output unit 219b. The input/output unit 219b receives the user instructions or specifications and outputs the received instructions or specifications to the control unit 217b.

Such buttons include "accept". The "accept" button is displayed together with the above-described messages. In the present example, if the user selects the "accept" button, it is regarded that the user has accepted to disclose the purchase history of the viewer to the sponsor. In that case, the viewing fee is discounted as compensation for the disclosure.

#### (2) Control Unit 217b

The control unit 217b further receives the specification from the user that is made by selecting the "accept" button, via the remote control 290b and input/output unit 219b.

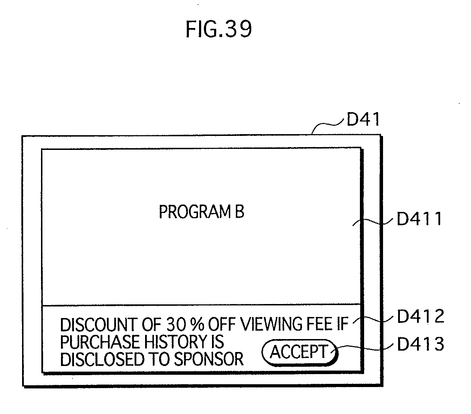

Upon receiving a specification of a program and then an instruction to display the specified program, the control unit 217b controls the reception antenna 220b, tuner unit 211b, demodulation unit 212b, and separation unit 213b to receive the program and the message. Fig. 39 shows a screen D41 that is an example of the screen containing the program D411 and the message D412. The area of the screen displaying the message D412 also includes an "accept" button D413.

The control unit 217b stores inside in advance a viewer ID for identifying a viewer uniquely.

Upon receiving specification of selection of the "accept" button, the control unit 217b reads the viewer ID from inside, generates accept information that includes the message and indicates that the viewer accepts to disclose the purchase history information to the sponsor, and transmits the read viewer ID and the generated accept information to the product purchase history management apparatus 570d in the viewing fee management center system 500d via the communication apparatus 240d and the Internet 2d.

4.4 Service Fee Receiving Apparatus 310d, Individual Identification Apparatus 340d, Communication Apparatus 330d

It is presumed here for example that the sponsor who has the sponsor system 300d is a railroad company.

The service fee receiving apparatus 310d is, for example, an apparatus that receives a fare from a user buying a ticket for riding a train that is managed by the railroad company.

The service fee receiving apparatus 310d receives specification of a destination from the user, calculates a fare to the destination, and displays the calculated fare.

The individual identification apparatus 340d stores in advance (i) characteristics information indicating the characteristics of the user extracted from the fingerprints and (ii) a client ID number for identifying the user uniquely.

The individual identification apparatus 340d reads a fingerprint of the user, extracts characteristics from the fingerprint, checks whether there is a characteristic in the characteristics information stored in advance that matches the extracted characteristics, and if there is, obtains a client ID number that corresponds to the matched characteristic and has been stored in advance, and outputs the obtained client ID number to the service fee receiving apparatus 310d.

The service fee receiving apparatus 310d receives the client ID number, generates purchase history information that is composed of the received client ID number, current date/time, destination, and fare, and transmits the generated purchase history information to the product purchase history management apparatus 570d via the communication apparatus 330d and the Internet 2d.

The service fee receiving apparatus 310d receives the charge of the discount from the viewing fee calculation apparatus 550d, calculates a discount, and if the calculated discount matches the charged discount, pays the charged discount to the viewing fee management center system 500d.

The service fee receiving apparatus 310d receives the taste information from the product purchase history management apparatus 570d, and stores the received taste information inside. In doing so, the service fee receiving apparatus 310d also receives a charge of price of the taste information from the product purchase history management apparatus 570d, calculates the price, and transmits price information that indicates payment of the calculated price to the viewing fee calculation apparatus 550d.

The communication apparatus 330d is connected to an external apparatus via the Internet 2d, and performs transmission/reception of information between the external apparatus and the service fee receiving apparatus 310d.

4.5 Viewing History Management Apparatus 530d, Viewing Fee Calculation Apparatus 550d, Product Purchase History Management Apparatus 570d

Viewing History Management Apparatus 530d

Upon receiving a request to read the viewing history information from the viewing fee calculation apparatus 550d, the viewing history management apparatus 530d reads the viewing history information that has been stored inside beforehand, and outputs the read viewing history information to the viewing fee calculation apparatus 550d.

Product Purchase History Management Apparatus 570d

The product purchase history management apparatus 570d receives the purchase history information from the service fee receiving apparatus 310d via the Internet 2d, and stores the received purchase history information inside.

The product purchase history management apparatus 570d receives the viewer ID and the accept information from the broadcast reception apparatus 210d via the Internet 2d, and stores the received viewer ID and accept information inside.

The product purchase history management apparatus 570d outputs the purchase history information and the accept information that have been stored inside, to the viewing fee calculation apparatus 550d.

The product purchase history management apparatus 570d also generates taste information of the viewer by analyzing the viewing history information that has been stored inside. For example, if the viewing history information shows that the viewer has viewed many sports programs, the product purchase history management apparatus 570d determines that the viewer likes sports. Also, if the viewing history information shows that the viewer has viewed many music programs, the product purchase history management apparatus 570d determines that the viewer likes music. The product purchase history management apparatus 570d generates the taste information to reflect such analysis results. The product purchase history management apparatus 570d then transmits the generated taste information to the service fee receiving apparatus 310d via the Internet 2d.

The product purchase history management apparatus 570d also transmits a charge of price of the transmitted taste information to the service fee receiving apparatus 310d via the Internet 2d.

Viewing Fee Calculation Apparatus 550d

The viewing fee calculation apparatus 550d sends a request to read the viewing history information to the viewing history management apparatus 530d.

The viewing fee calculation apparatus 550d receives the viewing history information from the viewing history management apparatus 530d, and calculates the viewing fee of the viewer based on the received viewing history information.

The viewing fee calculation apparatus 550d also receives the purchase history information and the accept information from the product purchase history management apparatus 570d, and calculates a discount of the viewing fee based on the received purchase history information and accept information, using the following formula.

Discount = (discount indicated by the purchase history information) + (discount indicated by the accept information)

The viewing fee calculation apparatus 550d then sends a charge of the discount to the service fee receiving apparatus 310d via the Internet 2d.

The viewing fee calculation apparatus 550d also receives price information as compensation for disclosure of the taste information from the service fee receiving apparatus 310d, and stores the received price information inside.

The viewing fee calculation apparatus 550d calculates an amount to be charged to the viewer using the following formula.

Charged amount = (viewing fee) - (discount) - (compensation for disclosure of the taste information)

The viewing fee calculation apparatus 550d charges the viewer the calculated amount.

### 4.6 Operation of Contents Distribution System 1d

The operation of the contents distribution system 1d will be described.

### (1) Operation of Broadcast Reception Apparatus 210d

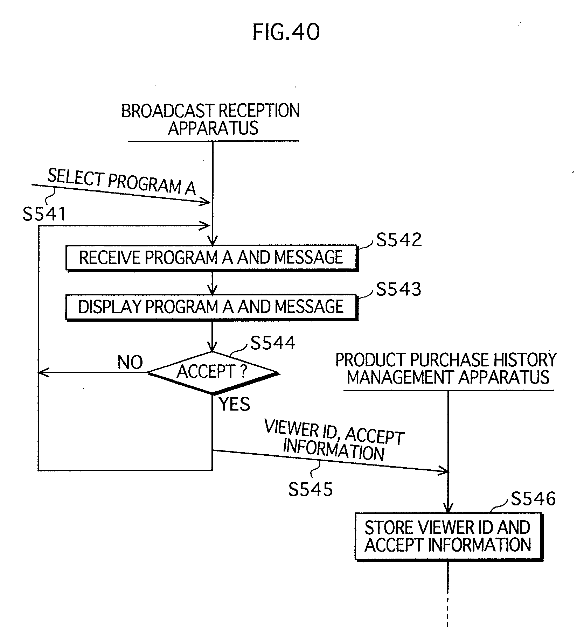

The operation of the broadcast reception apparatus 210d will be described with reference to the flowchart shown in Fig. 40.

Upon receiving a specification of a program and then an instruction to display the specified program (step S541), the control unit 217b controls the reception antenna 220b, tuner unit 211b, demodulation unit 212b, and separation unit 213b to receive the program and a message (step S542). The control unit 217b then exercises a control to display the screen D41 that includes the program D411 and the message D412 (step S543).

Upon receiving a selection of the "accept" button (step S544), the control unit 217b reads the viewer ID stored inside thereof, generates accept information that includes the message and indicates that the viewer accepts to disclose the purchase history information to the sponsor, and transmits the read viewer ID and the generated accept information to the product purchase history management apparatus 570d in the viewing fee management center system 500d via the communication apparatus 240d and the Internet 2d (step S545).

The product purchase history management apparatus 570d receives the viewer ID and the accept information from the broadcast reception apparatus 210d via the Internet 2d, and stores the received viewer ID and accept information inside (step S546).

### (2) Operation of Service Fee Receiving Apparatus 310d

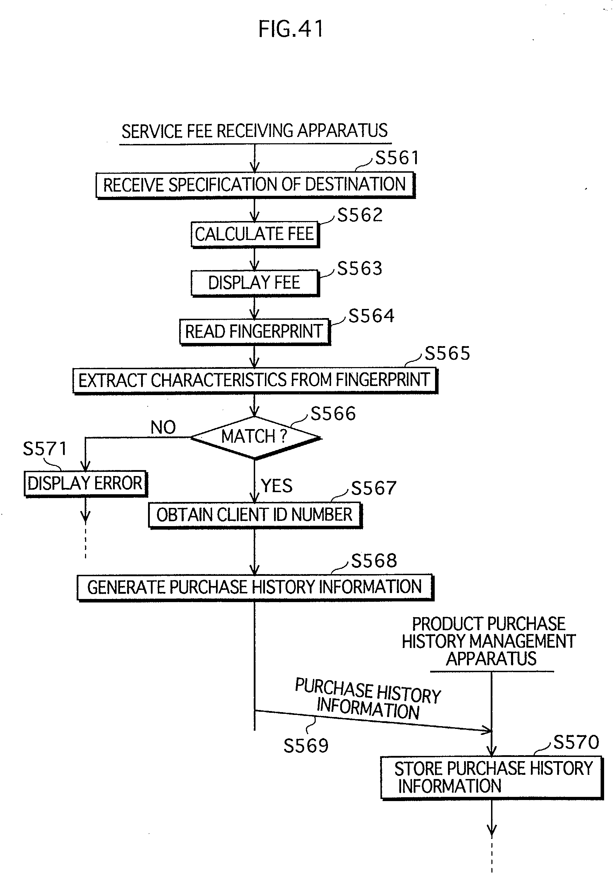

The operation of the service fee receiving apparatus 310d will be described with reference to the flowchart shown in Fig. 41.

Upon receiving a specification of a destination from the user (step S561), the service fee receiving apparatus 310d calculates a fare to the destination (step S562), and displays the calculated fare (step S563).

The individual identification apparatus 340d then reads fingerprints of the user (step S564), extracts characteristics from the fingerprints (step S565), checks whether there is a characteristic in the characteristics information stored in advance that matches an extracted characteristic (step S566), and if there is, obtains a client ID number that corresponds to the matched characteristic and has been stored in advance (step S567), and outputs the obtained client ID number to the service fee receiving apparatus 310d. The service fee receiving apparatus 310d receives the client ID number, generates purchase history information that is composed of the received client ID number, current date/time, destination, and fare, and transmits the generated purchase history information to the product purchase history management apparatus 570d via the communication apparatus 330d and the Internet 2d (step S569).

The product purchase history management apparatus 570d receives the purchase history information from the service fee receiving apparatus 310d via the Internet 2d (step S569), and stores the received purchase history information inside (step S570).

### (3) Operation of Broadcast Reception Apparatus 210d

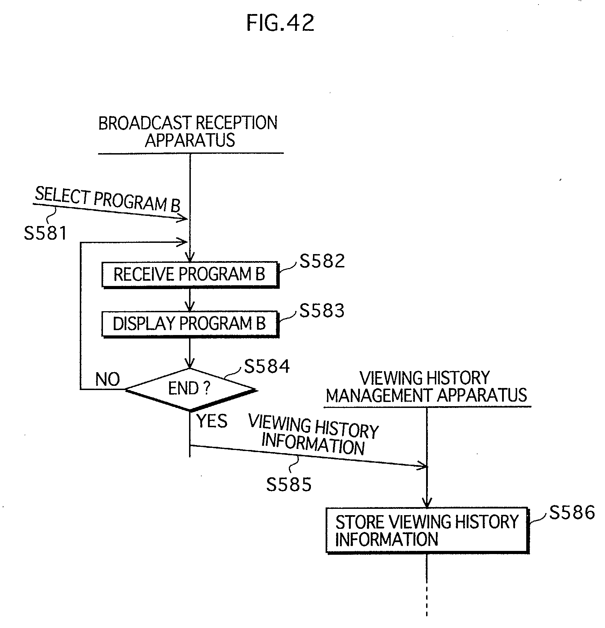

The operation of the broadcast reception apparatus 210d will be described with reference to the flowchart shown in Fig. 42.

Upon receiving a specification of a program and then an instruction to display the specified program (step S581), the control unit 217b controls the reception antenna 220b, tuner unit 211b, demodulation unit 212b, and separation unit 213b to receive the program (step S582). The control unit 217b then exercises a control to display the received program (step S583).

When the program ends (step S584), the control unit 217b transmits the viewing history information to the viewing history management apparatus 530d via the communication apparatus 240d and the Internet 2d (step S585).

The viewing history management apparatus 530d receives the viewing history information (step S585), and stored the received viewing history information inside (step S586).

#### (4) Operation of Viewing History Management Apparatus 530d, Viewing Fee Calculation Apparatus 550d, and Product Purchase History Management Apparatus 570d

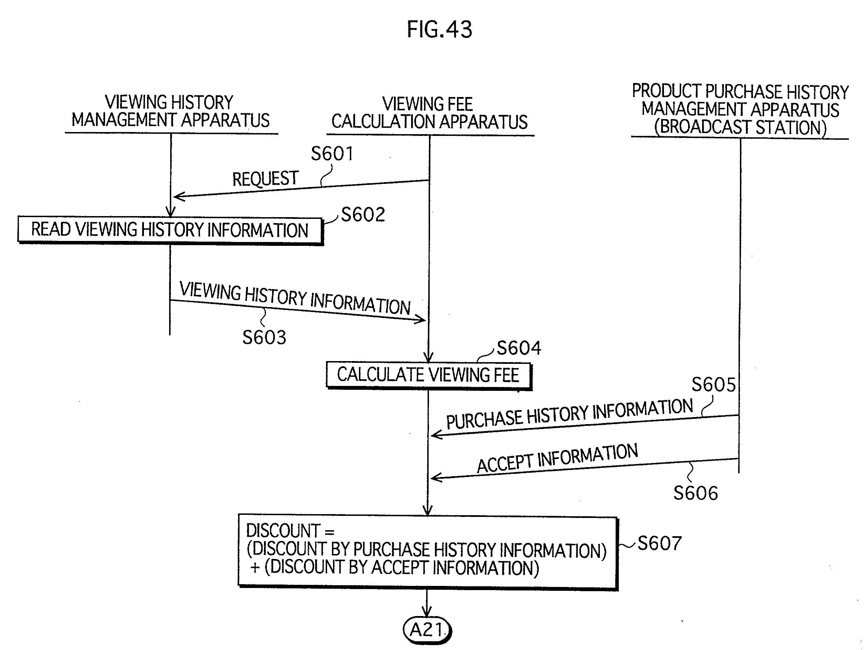

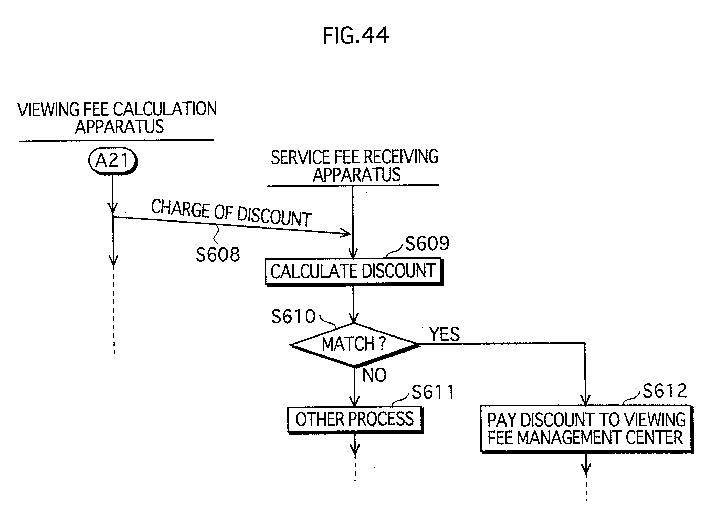

The operation of the viewing history management apparatus 530d, viewing fee calculation apparatus 550d, and product purchase history management apparatus 570d will be described with reference to the flowchart shown in Figs. 43-44.

The product purchase history management apparatus 570d outputs the purchase history information that has been stored inside, to the viewing fee calculation apparatus 550d (step S605). The product purchase history management apparatus 570d then outputs the accept information stored inside to the viewing fee calculation apparatus 550d (step S606).

The viewing fee calculation apparatus 550d sends a request to read the viewing history information to the viewing history management apparatus 530d (step S601).

The viewing history management apparatus 530d receives the request to read the viewing history information, from the viewing fee calculation apparatus 550d (step S601), reads the viewing history information stored inside (step S602), and outputs the read viewing history information to the viewing fee calculation apparatus 550d (step S603).

The viewing fee calculation apparatus 550d receives the viewing history information from the viewing history management apparatus 530d (step S603), and calculates the viewing fee of the viewer based on the received viewing history information (step S604).

The viewing fee calculation apparatus 550d then calculates a discount of the viewing fee based on the received purchase history information and accept information, using the following formula.

Discount = (discount indicated by the purchase history information) + (discount indicated by the accept information) (step S607).

The viewing fee calculation apparatus 550d then sends a charge of the discount to the service fee receiving apparatus 310d via the Internet 2d (step S608).

The service fee receiving apparatus 310d receives the charge of the discount from the viewing fee calculation apparatus 550d (step S608), calculates a discount (step S609), and if the calculated discount matches the charged discount (step S610), pays the charged discount to the viewing fee management center system 500d (step S612).

#### (5) Operation of Product Purchase History Management Apparatus 570d

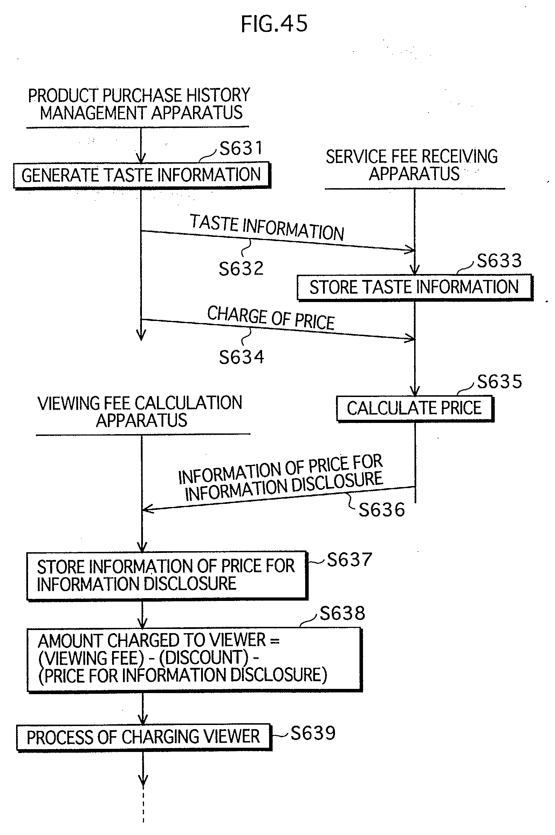

The operation of the product purchase history management apparatus 570d will be described with reference to the flowchart shown in Fig. 45.

The product purchase history management apparatus 570d also generates taste information of the viewer by analyzing the viewing history information that has been stored inside (step S631), and transmits the generated taste information to the service fee receiving apparatus 310d via the Internet 2d (step S632).

The service fee receiving apparatus 310d receives the taste information from the product purchase history management apparatus 570d (step S632), and stores the received taste information inside (step S633).

The product purchase history management apparatus 570d then transmits a charge of price of the transmitted taste information to the service fee receiving apparatus 310d via the Internet 2d (step S634).

The service fee receiving apparatus 310d receives the charge of price of the taste information from the product purchase history management apparatus 570d (step S634), calculates the price (stepS635), and transmits price information that indicates payment of the calculated price to the viewing fee calculation apparatus 550d using a safe communication protocol (step S636). It should be noted here that the price information may be as valuable as the currencies, and may be used instead of the currencies.

The viewing fee calculation apparatus 550d receives the price information as compensation for disclosure of the taste information from the service fee receiving apparatus 310d (step S636), and stores the received price information inside (step S637).

The viewing fee calculation apparatus 550d calculates an amount to be charged to the viewer using the following formula.

Charged amount = (viewingfee) - (discount) - (compensation for disclosure of the taste information) (step S638).

The viewing fee calculation apparatus 550d charges the viewer the calculated amount (step S639).

#### 4.7 Conclusion

As described above in Embodiment 4, the viewing fee management center system asks the viewer whether he/she accepts to disclose his/her purchase history information to the sponsor. If the viewer accepts to do, the viewer is given a discount of 30% off the viewing fee for a chargeable broadcast.

It is presumed here for example that the sponsor S manages a railroad company, and that the viewer uses the railroad every day at a section charging a fare of 500 yen.

To take the train, the viewer buys a ticket paying the fare to the service fee receiving apparatus 310d. When the viewer presses a button, the service fee receiving apparatus 310d reads fingerprint of the viewer, and the individual identification apparatus 340d identifies the viewer by the fingerprint.

It should be noted here that a recording medium such as IC card or a portable terminal such as a mobile phone may be used to identify a client. Alternatively, the client may input the client ID number him/herself. Furthermore, an identification for identifying the client, such as a credit card or a driver's license, may be used.

Note also that the service fee receiving apparatus may be an automated service fee receiving apparatus such as an automated ticket gate, as well as a ticket bending machine.

The purchase history information including the purchase amount, purchase date/time or the like is transmitted to the product purchase history management apparatus 570d via the communication apparatus 330d.

In the train, the viewer looks at an advertisement that notifies "a discount of 200 yen off the viewing fee of the program B per 5,000 yen of train rides during two weeks before and two weeks after the broadcast". Expecting to have 10,000 yen of train rides during the period, the viewer views the program B using the broadcast reception apparatus 210d at home, the program B being broadcast by the program distribution apparatus 110d of the broadcast station system 100d. The broadcast reception apparatus 210d then transmits the viewing history information to the viewing history management apparatus 530d via the communication apparatus 240d.

When the viewing fee management center system 500d calculates the viewing fee to be charged to the viewer, the viewing fee calculation apparatus 550d refers to the viewing history information stored in the viewing history management apparatus 530d. It is found that the normal viewing fee of the program B is 1,000 yen. However, referring to the product purchase history information stored in the product purchase history management apparatus 570d, the viewing fee calculation apparatus 550d finds that the viewer has used the railroad of the sponsor S as much as 10,000 yen in the specified period, as the viewer had expected previously. Accordingly, the viewing fee is discounted by 400 yen, and 600 yen is charged to the viewer, and 400 yen is charged to the sponsor.

Also, since the viewer has accepted to disclose the purchase history information, the viewing fee is discounted by 30% (namely, 300 yen). Accordingly, The viewing fee finally charged to the viewer by the viewing fee management center system 500d is 300 yen.

The product purchase history management apparatus 570d of the viewing fee management center system 500d transmits the taste information that shows the products the viewer bought and the purchase dates or the like, to the sponsor S. The viewing fee management center system 500d charges the sponsor S the compensation for the taste information that is equivalent to the 30% discount (300 yen) of the viewing fee. As a result, the sponsor shares the viewing fee of the program B with the viewer, paying 700 yen of the normal viewing fee of 1,000 yen.

The viewing fee management center system 500d transfers the viewing fee of the program B received from every viewer and the sponsor S. In this way, the broadcaster collects the program production cost, program distribution cost, and profit.

It should be noted here that also in a data (for example, music) distribution system, the use fee can be collected by a similar method.

## 5. Variations

Up to now, the present invention has been explained through several specific embodiments. However, not limited to these, the present invention can be varied in many ways . The following are such examples.

(1) The present invention may be realized as a contents distribution system comprising: a contents distribution apparatus that distributes (i) a content such as a broadcast program and (ii) product information concerning a product sold by a sponsor of the content; a reception apparatus that receives the content and the product information; and a sponsor apparatus owned by the sponsor. The contents distributed by the contents distribution system may be chargeable or free of charge.

A user views the content such as a broadcast program using the reception apparatus. The user also views the product information and buys the product related to the product information, from the sponsor.

The reception apparatus may be connected to the sponsor apparatus via the Internet. The user may buy the product by placing an order of the product to the sponsor apparatus using the reception apparatus via the Internet. When the user buys the product, the reception apparatus may transmit purchase amount information that indicates a purchase amount of the product that the user bought, to the contents distribution apparatus.

Alternatively, the user may buy the product at a retailer that sells the product. In this case, an IC card is inserted into a sales apparatus in the retailer. The sales apparatus writes information concerning the product the user bought, such as the purchase amount, into the IC card. The user inserts the IC card in which the information is written, into the reception apparatus. The reception apparatus further includes an IC card reader, and reads the information concerning the product the user bought from the inserted IC card, and transmits the purchase amount information among the read information to the contents distribution apparatus.

Upon receiving the purchase amount information, the contents distribution apparatus calculates a tenant fee or a commission to be charged to the sponsor based on the received purchase amount information, using a predetermined calculation method. The contents distribution apparatus then transmits a charge of the tenant fee or commission to the sponsor apparatus.

Upon receiving the charge of the tenant fee or commission, the sponsor apparatus transmits information for paying the tenant fee or commission to the contents distribution apparatus.

Also, when the user buys the product by placing an order of the product to the sponsor apparatus using the reception apparatus via the Internet, taking the place of the reception apparatus, the sponsor apparatus may transmit the purchase amount information to the contents distribution apparatus, and the contents distribution apparatus calculates the tenant fee or commission based on the received purchase amount information.

Also, when the user buys the product at the retailer, the sales apparatus may writes the purchase amount information of the product to an IC card, the reception apparatus may receive the purchase amount information via the IC card. After this, taking the place of the reception apparatus, the sales apparatus transmits the purchase amount information to the contents distribution apparatus, and the contents distribution apparatus calculates the tenant fee or commission based on the received purchase amount information.

Also, the reception apparatus may transmit not the purchase amount (amount of money) information, but purchase quantity information that indicates the quantity of the product the user bought, to the contents distribution apparatus, and the contents distribution apparatus calculates the tenant fee or commission based on the received purchase quantity information, and charges the sponsor apparatus the calculated tenant fee or commission.

(2) In Embodiments 2-4, the product purchase history management apparatus is included in the broadcast station. However, not limited to this, the product purchase history management apparatus may be included in another facility or system component. In such a case, the product purchase history management apparatus transmits the purchase history information of the viewer to the viewing fee calculation apparatus, so that the viewing fee calculation apparatus refers to it when calculating the viewing fee.

(3) The system explained in Embodiment 4, in which the compensation for use of the taste information paid by the sponsor is appropriated to the discount of the viewing fee, may be applied to Embodiments 2-3.

(4) In Embodiments 1-4, the broadcaster distributes broadcast programs. However, the target of the distribution is not limited to the broadcast programs. For example, other contents such as movie, music, character information, or computer program may be distributed.

(5) Embodiments 1-4 may be applied to a case where a communication represented by the Internet is used, or a case where the contents are once accumulated in an accumulation apparatus of a contents reception apparatus before the contents are used.

(6) In the above-described embodiments, the sponsor sells products and provides services. As understood from this, the product and service are treated as different things conceptually. However, these things may be conceptually treated as one. For example, the product may be regarded to include service, conceptually.

(7) In the above-described embodiments, the viewer has the broadcast reception apparatus. However, the present invention is not limited to this form.

That is to say, the viewer may buy and own the broadcast reception apparatus, or may use it by lending it from a rental system. Alternatively, the viewer may view programs or contents using the broadcast reception apparatus that is owned by someone else.

(8) The present invention may be methods that achieve the systems disclosed in the above embodiments. The present invention may be a computer program that achieves such methods on a computer. The present invention may be digital signals that contain such a computer program.

The present invention may be a computer readable recording medium, such as flexible disk, hard disk, CD-ROM, MO, DVD, DVD-ROM, DVD-RAM, BD (Blue-RayDisc), or semiconductor memory, that stores such a computer program or digital signals. The present invention maybe the computer program or digital signals recorded on such a computer readable recording medium.

In the present invention, such a computer program or digital signals maybe transferred via an electric communication line, a wireless or a wired communication line, or a network represented by the Internet.

The present invention may be a computer system having a microprocessor and a memory, where the memory stores the computer program, and the microprocessor operates as instructed by the computer program.

The computer program or digital signals may be recorded into a recording medium, transferred to a remote independent computer system via the recording medium, and implemented by the computer system. Alternatively, the computer program or digital signals may be transferred to a remote independent computer system via the network or the like, and implemented by the computer system.

(9) The present invention may be any combination of the above-described embodiments and variations.

6. Effects of the Invention

As described above, the present invention enables a contents user to use a content at a low cost, without being annoyed by company commercials or any limitations. Also, only by purchasing a necessary product, the company that sells the product bears part of the use fee of the content that the user should pay. This increases the user's appetite for buying the product.

The present invention also enables the contents producer/distributor to produce higher-quality contents since the contents producer/distributor can collect funds for the contents production cost or the use fee from the companies . Also, the contents producer/distributor can use the user purchase history information or the like as the source of acquiring funds from many fields.

The present invention also enables a company, that bears the content production cost as a sponsor of a content, to increase consumers of the company's products by urging users to buy the company's products as specified in the product information, offering to share the content use fee with users who bought the company's products. The company can also reduce the advertisement cost since the company does not need to create a new commercial or the like that is inserted into or presented together with the content, and is required to pay only the above-mentioned expenses. The company can also buy the taste information of the users from the contents distributor, and use it to analyze the products, do a close study of new products, and construct an effective sales strategy.

The present invention may be realized as a contents distribution system comprising: a contents distribution apparatus that distributes a chargeable content and product information concerning a product sold by a sponsor of the content; a reception apparatus that receives the chargeable content and the product information; and a sponsor apparatus owned by the sponsor, wherein a user buys the product related to the product information, the reception apparatus transmits purchase history information that indicates that the user bought the product, to the contents distribution apparatus, the contents distribution apparatus receives the purchase history information, calculates a discount of a viewing fee of the content using the received purchase history information, charges the user an amount that is obtained by subtracting the discount from the viewing fee, and charges the sponsor the discount, and the sponsor apparatus transmits information for compensating for the charged discount, to the contents distribution apparatus.

With the above-stated construction, the contents distribution system calculates a discount of a viewing fee of the chargeable content using the purchase history information, charges the user an amount that is obtained by subtracting the discount from the viewing fee, and charges the sponsor the discount, and the sponsor apparatus transmits information for compensating for the charged discount, to the contents distribution apparatus.

In this way, the sponsor bears part of the viewing fee that the viewer should pay for the viewing. Accordingly, the user benefits from the reduction of the viewing fee.

In the above contents distribution system, the reception apparatus maybe connected to the contents distribution apparatus via a communication line, and transmits the purchase history information to the contents distribution apparatus.

With the above-mentioned construction in which the reception apparatus that receives the chargeable content transmits the purchase history information, which indicates that the user bought the product, to the contents distribution apparatus, it is possible to reduce the use fee of the chargeable content of the user who bought the product.

In the above contents distribution system, the reception apparatus may be connected to the sponsor apparatus via a communication line, transmit order information that places an order for the product to the sponsor apparatus when the user buys the product, and generate and transmit the purchase history information to the contents distribution apparatus.

With the above-mentioned construction in which the reception apparatus transmits order information that places an order for the product to the sponsor apparatus when the user buys the product, and also generates and transmits the purchase history information to the contents distribution apparatus, a subject who places an order and a subject who generates the purchase history information are the same.

The above contents distribution system may further comprise a sales apparatus owned by a retailer, wherein the user buys the product from the retailer, the sales apparatus writes the purchase history information into a portable storage medium when the user buys the product, the user inserts the portable storage medium in which the purchase history information is written, into the reception apparatus, and the reception apparatus further includes a read unit that reads the purchase history information from the inserted portable storage medium, and transmits the read purchase history information to the contents distribution apparatus.

With the above-mentioned construction in which the sales apparatus owned by the retailer writes the purchase history information into a portable storage medium when the user buys the product at the retailer, the user inserts the portable storage medium in which the purchase history information is written, into the reception apparatus, and the reception apparatus reads the purchase history information from the inserted portable storage medium, and transmits the read purchase history information to the contents distribution apparatus, only the purchase history information of a user who bought a product is transmitted to the contents distribution apparatus.

In the above contents distribution system, the sponsor apparatus maybe connected to the contents distribution apparatus via a communication line, and generates and transmits the purchase history information to the contents distribution apparatus when the user buys the product.

With the above-mentioned construction in which the sponsor apparatus generates and transmits the purchase history information to the contents distribution apparatus when the user buys the product, the contents of the purchase history information match the sales of the product.

The above contents distribution system may further comprise a sales apparatus owned by a retailer, wherein the user buys the product from the retailer, and the sales apparatus generates and transmits the purchase history information to the contents distribution apparatus when the user buys the product.

With the above-mentioned construction in which the sales apparatus owned by the retailer generates and transmits the purchase history information to the contents distribution apparatus when the user buys the product at the retailer, the contents of the purchase history information match the sales of the product.

In the above contents distribution system, the contents distribution apparatus may generate, from the purchase history information, use information concerning use of the product by the user, and transmit the use information to the sponsor apparatus, the sponsor apparatus receives the use information, generates and transmits payment information that indicates a payment of a compensation for the use information, to the contents distribution apparatus, and the contents distribution apparatus receives the payment information and charges the user a further discounted amount that is obtained by subtracting the compensation indicated in the payment information from the amount obtained by subtracting the discount from the viewing fee.

With the above-mentioned construction in which the contents distribution apparatus generates, from the purchase history information, use information concerning use of the product by the user, and transmits the use information to the sponsor apparatus, the sponsor apparatus receives the use information, generates and transmits payment information that indicates a payment of a compensation for the use information, to the contents distribution apparatus, and the contents distribution apparatus receives the payment information and charges the user a further discounted amount that is obtained by subtracting the compensation indicated in the payment information from the amount obtained by subtracting the discount from the viewing fee, the user benefits from the further reduction of the viewing fee.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

**Claims**

1. A contents distribution system comprising: a contents distribution apparatus that distributes a chargeable content and product information concerning a product sold by a sponsor of the content; a reception apparatus that receives the chargeable content and the product information; and a sponsor apparatus owned by the sponsor, wherein
   a user buys the product related to the product information,
   the reception apparatus transmits purchase history information that indicates that the user bought the product, to the contents distribution apparatus,
   the contents distribution apparatus receives the purchase history information, calculates a discount of a viewing fee of the content using the received purchase history information, charges the user an amount that is obtained by subtracting the discount from the viewing fee, and charges the sponsor the discount, and
   the sponsor apparatus transmits information for compensating for the charged discount, to the contents distribution apparatus.

2. The contents distribution system of Claim 1, wherein
   the reception apparatus is connected to the contents distribution apparatus via a communication line, and transmits the purchase history information to the contents distribution apparatus.

3. The contents distribution system of Claim 2, wherein
   the reception apparatus is connected to the sponsor apparatus via a communication line, transmits order information that places an order for the product to the sponsor apparatus when the user buys the product, and generates and transmits the purchase history information to the contents distribution apparatus.

4. The contents distribution system of Claim 2 further comprising a sales apparatus owned by a retailer, wherein
   the user buys the product from the retailer,
   the sales apparatus writes the purchase history information into a portable storage medium when the user buys the product,
   the user inserts the portable storage medium in which the purchase history information is written, into the reception apparatus, and
   the reception apparatus further includes a read unit that reads the purchase history information from the inserted portable storage medium, and transmits the read purchase history information to the contents distribution apparatus.

5. The contents distribution system of Claim 1, wherein
   the sponsor apparatus is connected to the contents distribution apparatus via a communication line, and generates and transmits the purchase history information to the contents distribution apparatus when the user buys the product.

6. The contents distribution system of Claim 1 further comprising a sales apparatus owned by a retailer, wherein

the user buys the product from the retailer, and

the sales apparatus generates and transmits the purchase history information to the contents distribution apparatus when the user buys the product.

7. The contents distribution system of Claim 1, wherein

the contents distribution apparatus generates, from the purchase history information, use information concerning use of the product by the user, and transmits the use information to the sponsor apparatus,

the sponsor apparatus receives the use information, generates and transmits payment information that indicates a payment of a compensation for the use information, to the contents distribution apparatus, and

the contents distribution apparatus receives the payment information and charges the user a further discounted amount that is obtained by subtracting the compensation indicated in the payment information from the amount obtained by subtracting the discount from the viewing fee.

8. A contents distribution system comprising: a contents distribution apparatus that distributes a chargeable content and product information concerning a product sold by a sponsor of the content; a reception apparatus that receives the chargeable content and the product information; and a sponsor apparatus owned by the sponsor, wherein

the contents distribution apparatus calculates a sponsor fee that is a compensation for distribution of the product information, and transmits information indicating the sponsor fee to the sponsor apparatus,

the sponsor apparatus receives the information indicating the sponsor fee, generates and transmits payment information that indicates a payment of the sponsor fee, to the contents distribution apparatus.

9. A contents distribution system comprising: a contents distribution apparatus that distributes a content and product information concerning a product sold by a sponsor of the content; a reception apparatus that receives the content and the product information; and a sponsor apparatus owned by the sponsor, wherein

a user buys the product related to the product information,

the reception apparatus transmits purchase amount information that indicates a purchase amount of the product that the user bought, to the contents distribution apparatus,

the contents distribution apparatus receives the purchase amount information, calculates a commission based on the received purchase amount information, and charges the sponsor the commission, and

the sponsor apparatus transmits information concerning a payment of the commission to the contents distribution apparatus.

10. A payment collection method for use in a contents distribution system including: a contents distribution apparatus that distributes a chargeable content and product information concerning a product sold by a sponsor of the content; a reception apparatus that receives the chargeable content and the product information; and a sponsor apparatus owned by the sponsor, wherein a user buys the product related to the product information, the payment collection method comprising:

an information transmission step in which the reception apparatus transmits purchase history information that indicates that the user bought the product, to the contents distribution apparatus;

a calculation/transmission step in which the contents distribution apparatus receives the purchase history information, calculates a discount of a viewing fee of the content using the received purchase history information, charges the user an amount that is obtained by subtracting the discount from the viewing fee, and charges the sponsor the discount; and

a discount compensation information transmission step in which the sponsor apparatus transmits information for compensating for the charged discount, to the contents distribution apparatus.

11. A payment collection computer program for use in a contents distribution system including: a contents distribution apparatus that distributes a chargeable content and product information concerning a product sold by a sponsor of the content; a reception apparatus that receives the chargeable content and the product information; and a sponsor apparatus owned by the sponsor, wherein a user buys the product related to the product information, the payment collection computer program comprising:

an information transmission step in which the reception apparatus transmits purchase history information that indicates that the user bought the product, to the contents distribution apparatus;

a calculation/transmission step in which the contents distribution apparatus receives the purchase history information, calculates a discount of a viewing fee of the content using the received purchase history information, charges the user an amount that is obtained by subtracting the discount from the viewing fee, and charges the sponsor the discount; and

a discount compensation information transmission step in which the sponsor apparatus transmits information for compensating for the charged discount, to the contents distribution apparatus.

12. A computer-readable recording medium storing a payment collection computer program for use in a contents distribution system including: a contents distribution apparatus that distributes a chargeable content and product information concerning a product sold by a sponsor of the content; a reception apparatus that receives the chargeable content and the product information; and a sponsor apparatus owned by the sponsor, wherein a user buys the product related to the product information, the payment collection computer program comprising:

an information transmission step in which the reception apparatus transmits purchase history information that indicates that the user bought the product, to the contents distribution apparatus;

a calculation/transmission step in which the contents distribution apparatus receives the purchase history information, calculates a discount of a viewing fee of the content using the received purchase history information, charges the user an amount that is obtained by subtracting the discount from the viewing fee, and charges the sponsor the discount; and

a discount compensation information transmission step in which the sponsor apparatus transmits information for compensating for the charged discount, to the contents distribution apparatus.

# FIG.1

CONTENTS DISTRIBUTION SYSTEM ~1a

BROADCAST STATION SYTEM ~110a

180a

PROGRAM DISTRIBUTION APPARATUS ~100a

3a

BROADCAST SATELLITE

200a

220a

210a

BROADCAST RECEPTION APPARATUS

280a

230a

SPEAKER    MONITOR

VIEWER SYSTEM

201a

VIEWER SYSTEM

112a TRANSMISSION UNIT

113a MULTIPLEXING UNIT

INFORMATION STORAGE UNIT
121a PROGRAM INFORMATION
122a PRODUCT INFORMATION TABLE

114a CONTROL UNIT

115a

INPUT/OUTPUT UNIT
131a

INFORMATION STORAGE UNIT

COMMUNICATION UNIT
133a

141a COMMISSION INFORMATION TABLE

142a COMMISSION BILL TABLE

132a
143a SPONSOR INFORMATION TABLE

CONTROL UNIT
134a

INTERNET
2a

COMMISSION MANAGEMENT APPARATUS

130a

310a

SPONSOR SYSTEM ~300a

SALES MANAGEMENT APPARATUS

311a COMUNICATION UNIT

312a CONTROL UNIT

INFORMATION STORAGE UNIT

313a
321a COMMISSION INFORMATION TABLE

322a COMMISSION BILL TABLE

301a SPONSOR SYSTEM

SALES MANAGEMENT APPARATUS

# FIG.2

PRODUCT INFORMATION TABLE  ⟋ 122a

| PRODUCT INFORMATION | | | | |
|---|---|---|---|---|
| SPONSOR ID | SPONSOR NAME | PRODUCT ID | PRODUCT NAME | UNIT PRICE |
| 123 | COMPANY A | A001 | WATCH | 210,000 |
| 123 | COMPANY A | A002 | NECKLACE | 150,000 |
| 456 | COMPANY B | B001 | SHOES | 300,000 |
| 456 | COMPANY B | B002 | BAG | 200,000 |

## FIG.3

COMMISSION INFORMATION TABLE     141a

| COMMISSION INFORMATION | | | | | |
|---|---|---|---|---|---|
| SPONSOR ID | SPONSOR NAME | PRODUCT ID | PRODUCT NAME | UNIT PRICE | BROADCAST DATE/TIME |
| 123 | COMPANY A | A001 | WATCH | 210,000 | 2002/12/01  09:00:00 |
| 123 | COMPANY A | A002 | NECKLACE | 150,000 | 2002/12/01  09:00:00 |
| 456 | COMPANY B | B001 | SHOES | 300,000 | 2002/12/01  09:00:00 |
| 456 | COMPANY B | B002 | BAG | 200,000 | 2002/12/01  09:00:00 |
| 123 | COMPANY A | A001 | WATCH | 210,000 | 2002/12/02  09:00:00 |
| 123 | COMPANY A | A002 | NECKLACE | 150,000 | 2002/12/02  09:00:00 |
| 456 | COMPANY B | B001 | SHOES | 300,000 | 2002/12/02  09:00:00 |
| 456 | COMPANY B | B002 | BAG | 200,000 | 2002/12/02  09:00:00 |

FIG.4

COMMISSION INFORMATION TABLE ⟍⟋ 143a

| COMMISSION INFORMATION | |
|---|---|
| SPONSOR ID | URL |
| 123 | XYZ123.com |
| 456 | ABC456.com |
| 789 | IJK789.com |

EP 1 324 252 A2

# FIG.5

COMMISSION INFORMATION TABLE 142a

| COMMISSION INFORMATION | | |
|---|---|---|
| SPONSOR ID | BROADCAST DATE | COMMISSION |
| 123 | 2002/12/01 | 150,000 |
| 456 | 2002/12/01 | 200,000 |
| 123 | 2002/12/02 | 150,000 |
| 456 | 2002/12/02 | 200,000 |

EP 1 324 252 A2

FIG.6

COMMISSION INFORMATION TABLE                    321a

| COMMISSION INFORMATION | | | | | |
|---|---|---|---|---|---|
| SPONSOR ID | SPONSOR NAME | PRODUCT ID | PRODUCT NAME | UNIT PRICE | BROADCAST DATE/TIME |
| 123 | COMPANY A | A001 | WATCH | 210,000 | 2002/12/01  09:00:00 |
| 123 | COMPANY A | A002 | NECKLACE | 150,000 | 2002/12/01  09:00:00 |
| 123 | COMPANY A | A001 | WATCH | 210,000 | 2002/12/02  09:00:00 |
| 123 | COMPANY A | A002 | NECKLACE | 150,000 | 2002/12/02  09:00:00 |

## FIG.7

COMMISSION INFORMATION TABLE __ 322a

| COMMISSION INFORMATION | | |
|---|---|---|
| SPONSOR ID | BROADCAST DATE | COMMISSION |
| 123 | 2002/12/01 | 150,000 |
| 123 | 2002/12/02 | 150,000 |

EP 1 324 252 A2

FIG.8

D01

D011

PRODUCT
INFORMATION

D012

PROGRAM DISPLAY UNIT

| WATCH | D012 |
| NECKLACE | D013 |
| SHOES | D014 |
| BAG | D015 |

D106

| PRODUCT ID | PRODUCT NAME | SPONSOR NAME | UNIT PRICE |
|---|---|---|---|
| A001 | WATCH | COMPANY A | 210,000 |

## FIG.9

BROADCAST RECEPTION
APPARATUS

PROGRAM DISTRIBUTION
APPARATUS

COMMISSION MANAGEMENT
APPARATUS

SALES MANAGEMENT
APPARAUTS

S121
READ PROGRAM INFORMATION

S122
READ PRODUCT INFORMATION TABLE

MULTIPLEXING — S123

S101
RECEIVE PROGRAM ◄ - - - BROADCAST PROGRAM — S124

S102
REPRODUCE PROGRAM

GENERATE COMMISSION INFORMATION — S125

COMMISSION INFORMATION

S126

S131
DETERMINE TRANSMISSION DESTINATION

COMMISSION INFORMATION

S132

S133 — WRITE COMMISSION
INFORMATION

S134
CALCULATE COMMISSION

COMMISSION

S135

S136 — WRITE COMMISSION
BILL INFORMATION

S137
WRITE COMMISSION
BILL INFORMATION

EP 1 324 252 A2

# FIG.10

FIG.11

PURCHASE HISTORY INFORMATION,
VIEWING HISTORY INFORMATION,
VIEWING FEE

S151

10b
BROADCASTER

S152

S153

CONTENTS
(PROGRAM,
SPONSOR INFORMATION)

DISCOUNT, SPONSOR FEE,
SPONSOR INFORMATION

20b

VIEWER

S154    PRICE

S155    PRODUCT

30b

SPONSOR

S158

PRICE

S156

ORIGINAL COST

PRODUCT,
PURCHASE HISTORY
INFORMATION

S157

PRODUCT

S159

RETAILER

40b

EP 1 324 252 A2

# FIG.12

~100b

BROADCAST STATION SYTEM

~180b

**PROGRAM DISTRIBUTION APPARATUS**

~112b TRANSMISSION UNIT

~113b MULTIPLEXING UNIT

CONTROL UNIT
~114b

~115b **INFORMATION STORAGE UNIT** ~110b

| PROGRAM INFORMATION | ~121b |
| EPG | ~122b |
| SPONSOR LIST | ~123b |
| SPONSOR A INFORMATION | ~124b |
| SPONSOR C INFORMATION | ~125b |

~170b

**PRODUCT PURCHASE HISTORY MANAGEMENT APPARATUS**

130b

**VIEWING HISTORY MANAGEMENT APPARATUS**

INFORMATION STORAGE UNIT ~134b

VIEWING HISTORY INFORMATION TABLE

~137b CONTROL UNIT

~131b

133b

INPUT/OUTPUT UNIT

136b

INPUT UNIT

COMMUNICATION UNIT

135b DISPLAY UNIT

~132b

150b

**VIEWING FEE CALCULATION APPARATUS**

INFORMATION STORAGE UNIT ~152b

153b

151b CONTROL UNIT

INPUT/OUTPUT UNIT

COMMUNICATION UNIT

INFORMATION STORAGE UNIT ~173b

PURCHASE HISTORY INFORMATION TABLE

177b

~171b CONTROL UNIT

174b INPUT UNIT

175b DISPLAY UNIT

INPUT/OUTPUT UNIT

176b

COMMUNICATION UNIT

~172b

TO INTERNET    154b    TO INTERNET    TO INTERNET

EP 1 324 252 A2

44

# FIG.13

TIME — T101 · T102

| T103 | T104 | T105 |
|------|------|------|
| PROGRAM A | PROGRAM E | PROGRAM G |

T106

| EPG | EPG | EPG | EPG | EPG | EPG | EPG | EPG | EPG | EPG | EPG | EPG |

T107

T108

| S | S | S | S | S | S | S | S | S | S | S | S | S | S |

100ch

| T109 | T110 | T111 | T112 |
|------|------|------|------|
| SPONSOR LIST | SPONSOR A INFORMATION | SPONSOR B INFORMATION | SPONSOR C INFORMATION |

COMPANY P, P001
SPONSOR S, S001
SPONSOR C INFORMATION
⋮

SPONSOR NAME: SPONSOR S
SPONSOR ID: S001
EXPIRATION DATE: 2002.12.31
MESSAGE: DISCOUNT OF 200 YEN OFF VIEWING
            FEE PER PURCHASE OF 5,000 YEN !
URL:ABCDEF.com
PRODUCT NAME: ORANGE BEER
PRODUCT ID: ABC001
UNIT PRICE: 2,000
SCREEN INFO

EP 1 324 252 A2

## FIG.14

TIME
T121

101ch | PROGRAM B | PROGRAM H

T122

102ch | PROGRAM C | PROGRAM F | PROGRAM I

T123

103ch | PROGRAM D | PROGRAM J

T124

T125

104ch | S | S | S | S | S | S | S | S | S | S | S | S | S | S | S | S | S | S | S | S | S

EP 1 324 252 A2

## FIG.15

BROADCAST RECEPTION APPARATUS

211b TUNER UNIT → 212b DEMODULATION UNIT → 213b SEPARATION UNIT → 214b AUDIO DECODER → 280b SPEAKER

215b IMAGE DECODER → 216b COMBINING UNIT → 230b MONITOR

220b

217b CONTROL UNIT

218b CONNECTION UNIT

219b INPUT/OUTPUT UNIT

210b

251b INFORMATION STORAGE UNIT

250b CONNECTION UNIT

270b ID CARD READER

290b REMOTE CONTROL

240b COMMUNICATION APPARATUS

PRODUCT PURCHASE HISTORY INFORMATION TABLE

253b | 252b CONTROL UNIT

254b PRODUCT PURCHASE HISTORY MANAGEMENT APPARATUS

VIEWER SYSTEM

200b

EP 1 324 252 A2

47

FIG.16

VIEWING HISTORY INFORMATION 261b

| VIEWER ID | ID001 |
|---|---|
| VIEWER NAME | ○○×× |
| CHANNEL NUMBER | 100ch |
| PROGRAM NAME | PROGRAM B |
| VIEWING DATE/ TIME | 2002.12.30 10:00～13:00 |

## FIG.17

ORDER INFORMATION  ~262b

| ORDER SENDER NAME | ○○×× |
|---|---|
| ORDER SENDER ID | ID001 |
| ORDER DATE/TIME | 2002.12.30, 09:30 |
| ORDER RECEIVER NAME | SPONSOR S |
| ORDER RECEIVER URL | ABCDEF.com |
| ORDERED PRODUCT NAME | ORANGE BEER |
| ORDERED PRODUCT ID | ABC001 |
| NUMBER | 5 |
| UNIT PRICE | 2000 |
| TOTAL AMOUNT | 10000 |
| DISCOUNT INFORMATION | 200 YEN/5,000 YEN |

## FIG.18

PURCHASE HISTORY INFORMATION 263b

| | |
|---|---|
| ORDER SENDER NAME | ○○×× |
| ORDER SENDER ID | ID001 |
| ORDER DATE/TIME | 2002.12.30, 09:30 |
| ORDER RECEIVER NAME | SPONSOR S |
| ORDER RECEIVER URL | ABCDEF.com |
| ORDERED PRODUCT NAME | ORANGE BEER |
| ORDERED PRODUCT ID | ABC001 |
| NUMBER | 5 |
| UNIT PRICE | 2000 |
| TOTAL AMOUNT | 10000 |
| DISCOUNT INFORMATION | 200 YEN/5,000 YEN |

FIG.19A

EP 1 324 252 A2

| TIME | 100ch | 101ch | 102ch | 103ch |
|---|---|---|---|---|
| 10:00 | PROGRAM A | PROGRAM B | PROGRAM C | PROGRAM D |
| 11:00 | | | | |
| 12:00 | PROGRAM E | PROGRAM H | PROGRAM F | PROGRAM J |
| 13:00 | | | | |
| 14:00 | PROGRAM G | | PROGRAM I | |
| 15:00 | | | | |

D11

D111

PROGRAM VIEWING    SPONSOR

D112          D113

FIG.19B

D12

SPONSOR LIST

COMPANY P

SPONSOR S    D121

COMPANY M

.
.
.

FIG.19C

D13

SPONSOR S

ORANGE BEER
2,000 YEN

Beer

EXPIRATION DATE: 2002.12.31

DISCOUNT OF 200 YEN OFF
VIEWING FEE PER PURCHASE
OF 5,000 YEN !

URL : ABCDEF.com

ORDER SCREEN    CANCEL

D132

FIG.19D

D14

SPONSOR S ORDER SCREEN

D141

BEER (ONE CASE)    5 CASE(S)

TOTAL AMOUNT    10000 YEN

PURCHASE    CANCEL

D142

EP 1 324 252 A2

FIG.20

| | | 312b | 313b |
| INFORMATION STORAGE UNIT | | INPUT UNIT | DISPLAY UNIT |

311b

314b

ORDER INFORMATION TABLE — CONTROL UNIT

317b

COMMUNICATION UNIT

315b

ORDER SCREEN INFORMATION — SALES PROCESSING UNIT

316b

318b

SALES APPARATUS

310b

EP 1 324 252 A2

## FIG.21

RETAIL SYSTEM
400b

## FIG.22

PRODUCT INFORMATION TABLE — 418b

| PRODUCT INFORMATION | | | |
|---|---|---|---|
| PRODUCT ID | DISCOUNT INFORMATION | UNIT PRICE | MAKER ID |
| ABC001 | 200 YEN/5,000 YEN | 2,000 | M001 |
| XYZ123 | 200 YEN/6,000 YEN | 3,000 | P001 |
| ⋮ | ⋮ | | |

## FIG.23

NFORMATION STORAGE UNIT ~31b

PRODUCT PURCHASE HISTORY
INFORMATION ~33b

| PURCHASE DATE/TIME | 2003.01.15, 10:00 |
|---|---|
| STORE NAME | SUPERMARKET ABC |
| PRODUCT NAME | ORANGE BEER |
| PRODUCT ID | ABC001 |
| NUMBER | 5 |
| UNIT PRICE | 2000 |
| TOTAL AMOUNT | 10000 |
| DISCOUNT INFORMATION | 200 YEN/5,000 YEN |

~34b

| USER ID | ID001 |
|---|---|

~32b

| INPUT/OUTPUT UNIT |
|---|

IC CARD

~600b

## FIG.24

BROADCAST RECEPTION
APPARATUS

INSTRUCTION TO
DISPLAY EPG SCREEN
S201

S202
RECEIVE EPG

S203
DISPLAY EPG SCREEN

SELECT PROGRAM
S204

S205
RECEIVE PROGRAM SELECTION

INSTRUCTION TO
DISPLAY SPONSOR LIST
S206

S207
RECEIVE SPONSOR LIST

S208
DISPLAY SPONSOR LIST

SELECT SPONSOR
S209

S210
RECEIVE SPONSOR INFORMATION

S211
DISPLAY SPONSOR INFORMATION

(ORDERING PRODUCT)

INSTRUCTION TO DISPLAY
ORDER SCREEN
S221

S222
EXTRACT URL FROM SPONSOR INFORMATION

SALES APPARATUS

URL, REQUEST FOR ORDER
SCREEN INFORMATION
S223

S224
READ ORDER SCREEN INFORMATION

ORDER SCREEN INFORMATION
S225

DISPLAY ORDER SCREEN —S226

A11

A12

## FIG.25

(A11)                    (A12)

NUMBER OF ORDERED
PRODUCTS

S227              S228

RECEIVE NUMBER OF ORDERED PRODUCTS

PLACEMENT
OF ORDER

S229

RECEIVE PLACEMENT OF ORDER    S230

GENERATE ORDER INFORMATION    S231

ORDER INFORMATION    S232

GENERATE PURCHASE HISTORY INFO    S235

STORE ORDER INFO    S233

STORE PURCHASE HISTORY INFO    S236

PROCESS OF SELLING PRODUCT

S234

(PROGRAM VIEWING)

INSTRUCTION
TO DISPLAY
EPG SCREEN

S251              S252

RECEIVE EPG

SELECT        S253
PROGRAM  DISPLAY EPG SCREEN

S254              S255

RECEIVE PROGRAM SELECTION

INSTRUCTION TO
DISPLAY PROGRAM

S256              S258

RECEIVE AND DISPLAY    GENERATE VIEWING
PROGRAM            HISTORY INFORMATION

VIEWING HISTORY
MANAGEMENT
APPARATUS

VIEWING HISTORY
INFORMATION

S257              S259    S260

STORE VIEWING HISTORY
INFORMATION

# FIG.26

## PURCHASE AT RETAILER

PAYMENT RECEIVING APPARATUS

READ BAR CODE — S271

RECEIVE NUMBER OF PURCHASED PRODUCTS — S272

READ DISCOUNT INFOMATION FROM PRODUCT INFOMATION TABLE — S273

READ UNIT PRICE — S274

CALCULATE PURCHASE AMOUNT — S275

PROCESS OF RECEIVING PURCHASE AMOUNT — S276

GENERATE PRODUCT PURCHASE HISTORY INFORMATION — S277

WRITE PRODUCT PURCHASE HISTORY INFORMATION TO IC CARD — S278

IC CARD

PRODUCT PURCHASE HISTORY MANAGEMENT APPARATUS

READ PRODUCT PURCHASE HISTORY INFORMATION FROM IC CARD — S279

WRITE PRODUCT PURCHASE HISTORY INFORMATION — S280

FIG.27

VIEWING HISTORY MANAGEMENT APPARATUS | VIEWING FEE CALCULATION APPARATUS | PRODUCT PURCHASE HISTORY MANAGEMENT APPARATUS (BROADCAST STATION) | PRODUCT PURCHASE HISTORY MANAGEMENT APPARATUS (VIEWER)

S291 REQUEST

S292

READ VIEWING HISTORY INFORMATION

REQUEST

S311

S312

READ PURCHASE HISTORY INFORMATION

VIEWING HISTORY INFORMATION

S293

S294

CALCULATE VIEWING FEE

PURCHASE HISTORY INFORMATION

PURCHASE HISTORY INFORMATION

S313

PURCHASE HISTORY INFORMATION

S314

CALCULATE DISCOUNT ~S295

CHARGED AMOUNT = VIEWING FEE -DISCOUNT ~ S296

PROCESS OF CHARGING VIEWER ~S297

(A13)

# FIG.28

VIEWING FEE CALCULATION
APPARATUS

(A13)

SALES APPARATUS

CHARGE OF DISCOUNT

S298

S299

CALCULATE DISCOUNT

S300

MATCH ?

YES

NO

S301

ANOTHER PROCESS

S302

PAY DISCOUNT TO
BROADCAST STATION

EP 1 324 252 A2

FIG.29

BROADCAST SATELLITE

3C

BROADCAST STATION SYTEM ~100c

180c

PROGRAM DISTRIBUTION APPARATUS ~110c

170c

PRODUCT PURCHASE HISTORY MANAGEMENT APPARATUS

130c VIEWING HISTORY MANAGEMENT APPARATUS

150c VIEWING FEE CALCULATION APPARATUS

301c

300c SPONSOR SYSTEM

SALES APPARATUS

310c

INTERNET

2c

200c

220c

210c BROADCAST RECEPTION APPARATUS

SPEAKER

COMMUNICATION APPARATUS

280c

MONITOR

230c

240c

VIEWER SYSTEM

201c

401c

400c

430c COMMUNICATION APPARATUS

BAR CODE READER

PAYMENT RECEIVING APPARATUS

440c

INDIVIDUAL IDENTIFICATION APPARATUS

410c

450c

RETAIL SYSTEM

CONTENTS DISTRIBUTION SYSTEM

1c

## FIG.30

EP 1 324 252 A2

## FIG.31

101ch

PROGRAM B

BANNER CM#1  BANNER CM#2  BANNER CM#3  BANNER CM#1

T401  T402  T403  T404  T405  T406  T407  TIME

EP 1 324 252 A2

FIG.32

PROGRAM B ~ D31

~ D311

DISCOUNT OF 200 YEN OFF VIEWING
FEE PER PURCHASE OF 5,000 YEN OF
ORANGE BEER ! ~ D312

Orange
Beer

CHARGED

D313

CANCEL

CHARGED

CHARGED

PROGRAM B ~ D314

~ D32

1,000 YEN OF VIEWING FEE
WILL BE CHARGED IF YOU
SELECT "CHARGED"BUTTON ~ D311

ACCEPT     CANCEL

DISCOUNT OF 200 YEN OFF VIEWING
FEE PER PURCHASE OF 5,000 YEN OF
ORANGE BEER ! ~ D312

Orange
Beer

ACCEPT

D316

ACCEPT

ACCEPT

PROGRAM B ~ D33

~ D315

NO CHARGE

D317

# FIG.33

BROADCAST RECEPTION APPARATUS

SELECT PROGRAM B — S421

RECEIVE PROGRAM B AND BANNER CM — S422

DISPLAY COMBINATION OF PROGRAM B AND BANNER CM — S423

BUTTON (S424)
- END → CHARGED
- OTHERS (CONTINUE VIEWING)

ACCEPT ? (S425)
- YES
- NO

RECEIVE PROGRAM B — S426

DISPLAY PROGRAM B — S427

TOTAL UP VIEWING TIME — S428

BUTTON (S429)
- END
- OTHERS (CONTINUE VIEWING)

TRANSMIT VIEWING INFORMATION — S430

65

# FIG.34

PURCHASE AT RETAILER

PAYMENT RECEIVING APPARATUS

READ BAR CODE — S451

RECEIVE NUMBER OF PURCHASED PRODUCTS — S452

RECEIVE CLIENT ID NUMBER — S453

READ DISCOUNT INFOMATION FROM PRODUCT INFOMATION TABLE — S454

READ UNIT PRICE — S455

CALCULATE PURCHASE AMOUNT — S456

PROCESS OF RECEIVING PURCHASE AMOUNT — S457

GENERATE PRODUCT PURCHASE HISTORY INFORMATION — S458

PRODUCT PURCHASE HISTORY MANAGEMENT APPARATUS

PRODUCT PURCHASE HISTORY INFORMATION

S459

WRITE PRODUCT PURCHASE HISTORY INFORMATION — S460

# FIG.35

**CONTENTS DISTRIBUTION SYSTEM** (1d)

BROADCAST STATION SYTEM (100d)

- 180d
- PROGRAM DISTRIBUTION APPARATUS (110d)

**VIEWING FEE MANAGEMENT CENTER SYSTEM** (500d)

- VIEWING HISTORY MANAGEMENT APPARATUS (530d)
- VIEWING FEE CALCULATION APPARATUS (550d)
- PRODUCT PURCHASE HISTORY MANAGEMENT APPARATUS (570d)

BROADCAST SATELLITE (3d)

INTERNET (2d)

301d

**VIEWER SYSTEM** (200d)

- 220d
- BROADCAST RECEPTION APPARATUS (210d)
- SPEAKER (280d)
- MONITOR (230d)
- COMMUNICATION APPARATUS (240d)

201d

300d

**SPONSOR SYSTEM**

- COMMUNICATION APPARATUS (330d)
- SERVICE FEE RECEIVING APPARATUS (310d)
- INDIVIDUAL IDENTIFICATION APPARATUS (340d)

EP 1 324 252 A2

## FIG.36

DISCOUNT, TASTE INFORMATION USE FEE — S501

BROADCASTER — 10d

SPONSOR INFORMATION, SPONSOR FEE — S502

VIEWING HISTORY INFORMATION VIEWING FEE — S503

VIEWING FEE MANAGEMENT CENTER — 50d

CONTENTS (PROGRAM, SPONSOR INFORMATION) — S504

TASTE INFORMATION USE FEE, DISCOUNT, PURCHASE HISTORY INFORMATION — S507

USER TASTE INFORMATION — S508

VIEWER — 20d

S505 — PRICE

PRODUCT, SERVICE — S506

SPONSOR — 30d

## FIG.37

## FIG.38

TIME

T501

T502

PROGRAM A

T503

100ch

M M M M M M M M M

T504

DISCOUNT OF 30 % OFF VIEWING FEE
IF PURCHASE HISTORY IS DISCLOSED
TO SPONSOR

EP 1 324 252 A2

FIG.39

D41

PROGRAM B

D411

DISCOUNT OF 30 % OFF VIEWING FEE IF
PURCHASE HISTORY IS
DISCLOSED TO SPONSOR (ACCEPT)

D412

D413

FIG.40

BROADCAST RECEPTION
APPARATUS

SELECT PROGRAM A

S541

S542

RECEIVE PROGRAM A AND MESSAGE

S543

DISPLAY PROGRAM A AND MESSAGE

S544

NO    ACCEPT ?

YES

PRODUCT PURCHASE HISTORY
MANAGEMENT APPARATUS

VIEWER ID, ACCEPT
INFORMATION

S545

S546

STORE VIEWER ID AND
ACCEPT INFORMATION

# FIG.41

SERVICE FEE RECEIVING APPARATUS

S561
RECEIVE SPECIFICATION OF DESTINATION

S562
CALCULATE FEE

S563
DISPLAY FEE

S564
READ FINGERPRINT

S565
EXTRACT CHARACTERISTICS FROM FINGERPRINT

S566
MATCH ?

NO
S571
DISPLAY ERROR

YES
S567
OBTAIN CLIENT ID NUMBER

S568
GENERATE PURCHASE HISTORY INFORMATION

PRODUCT PURCHASE
HISTORY MANAGEMENT
APPARATUS

PURCHASE HISTORY
INFORMATION

S569

S570
STORE PURCHASE HISTORY
INFORMATION

## FIG.42

BROADCAST RECEPTION
APPARATUS

SELECT PROGRAM B

S581

RECEIVE PROGRAM B — S582

DISPLAY PROGRAM B — S583

S584

NO ← END ?

YES    VIEWING HISTORY
        INFORMATION

VIEWING HISTORY
MANAGEMENT APPARATUS

S585

STORE VIEWING HISTORY — S586
INFORMATION

# FIG.43

VIEWING HISTORY
MANAGEMENT APPARATUS

VIEWING FEE
CALCULATION APPARATUS

PRODUCT PURCHASE HISTORY
MANAGEMENT APPARATUS
(BROADCAST STATION)

S601

REQUEST

S602

READ VIEWING HISTORY INFORMATION

VIEWING HISTORY INFORMATION

S603

S604

CALCULATE VIEWING FEE

S605

PURCHASE HISTORY INFORMATION

ACCEPT INFORMATION

S606

DISCOUNT =
(DISCOUNT BY PURCHASE HISTORY INFORMATION)
+ (DISCOUNT BY ACCEPT INFORMATION)

S607

A21

EP 1 324 252 A2

## FIG.44

VIEWING FEE CALCULATION
APPARATUS

(A21)

SERVICE FEE RECEIVING
APPARATUS

CHARGE OF DISCOUNT

S608

S609
CALCULATE DISCOUNT

S610
MATCH ? — YES

NO

S611
OTHER PROCESS

S612
PAY DISCOUNT TO VIEWING
FEE MANAGEMENT CENTER

EP 1 324 252 A2

## FIG.45

PRODUCT PURCHASE HISTORY
MANAGEMENT APPARATUS

S631
GENERATE TASTE INFORMATION

SERVICE FEE RECEIVING
APPARATUS

TASTE INFORMATION

S632

S633
STORE TASTE INFORMATION

CHARGE OF PRICE

S634

S635
CALCULATE PRICE

VIEWING FEE CALCULATION
APPARATUS

INFORMATION OF PRICE FOR
INFORMATION DISCLOSURE

S636

STORE INFORMATION OF PRICE FOR
INFORMATION DISCLOSURE    S637

AMOUNT CHARGED TO VIEWER =
(VIEWING FEE) - (DISCOUNT) -
(PRICE FOR INFORMATION DISCLOSURE)    S638

PROCESS OF CHARGING VIEWER    S639